# EUROPEAN PATENT APPLICATION

(11) **EP 4 173 918 A1**
(43) Date of publication of application: **03.05.2023**
(21) Application number: 21831993.7
(22) Date of filing: 15.06.2021
(51) Int. Cl.: B60W 50/04, B60W 40/02, B60W 50/035, G01C 21/34, G08G 1/0968

(54) **CONTROL DEVICE, CONTROL METHOD, STORAGE MEDIUM, AND CONTROL SYSTEM**

(30) Priority: 29.06.2020 JP 2020111637
(71) Applicant: Sony Semiconductor Solutions Corporation, Atsugi-shi, Kanagawa 243-0014 (JP)
(72) Inventor: YAMASHITA, Yutaro, Atsugi-shi, Kanagawa 243-0014 (JP)
(74) Representative: Witte, Weller & Partner Patentanwälte mbB
(86) International application number: PCT/JP2021/022657
(87) International publication number: WO 2022/004352

(57) **Abstract**

A control device includes a recognition section that recognizes an environment around a mobile body, a diagnosis section that diagnoses, based on a recognition result of the recognition section, an intensity of an electromagnetic wave emitted to the mobile body while traveling, and a route planning section that determines a moving route of the mobile body based on a diagnosis result of the diagnosis section.

## Description

### Field

The present disclosure relates to a control device, a control method, a storage medium, and a control system.

### Background

When a control device is exposed to strong electromagnetic waves such as radio interference, the control device may malfunction due to generated noise. Therefore, by enclosing an object with a metal plate or the like called a shield that blocks electromagnetic waves, the control device prevents generation of noise and prevents malfunction.

### Citation List

### Patent Literature

Patent Literature 1: JP 2005-092418 A

### Summary

### Technical Problem

However, from the viewpoint of fail-safe, it is necessary to assume that the shield may not completely block the electromagnetic wave. Further, there is a demand for a technique capable of executing an appropriate process even when electromagnetic waves are emitted.

Therefore, the present disclosure proposes a control device, a control method, a storage medium, and a control system capable of executing appropriate control even when strong electromagnetic waves are radiated.

### Solution to Problem

According to the present disclosure, a control device includes: a recognition section configured to recognize an environment around a mobile body; a diagnosis section configured to diagnose, based on a recognition result of the recognition section, an intensity of an electromagnetic wave emitted to the mobile body while traveling; and a route planning section configured to determine a moving route of the mobile body based on a diagnosis result of the diagnosis section.

### Brief Description of Drawings

FIG. 1 is a top view illustrating an example of a schematic configuration of a mobile body according to a first embodiment of the present disclosure.
FIG. 2 is a graph illustrating an example of electromagnetic wave characteristics of the mobile body of the present disclosure.
FIG. 3 is a diagram illustrating a configuration example of a control system according to the first embodiment of the present disclosure.
FIG. 4 is a diagram illustrating a configuration example of a server device according to the first embodiment of the present disclosure.
FIG. 5 is a flowchart illustrating an example of a route planning process executed by a control device according to the first embodiment of the present disclosure.
FIG. 6 is a flowchart illustrating an example of a travel detection process executed by the control device according to the first embodiment of the present disclosure.
FIG. 7 is a diagram illustrating a configuration example of a control system according to Modification 1 of the first embodiment of the present disclosure.
FIG. 8 is a diagram illustrating a configuration example of a control system according to Modification 2 of the first embodiment of the present disclosure.
FIG. 9 is a diagram illustrating a configuration example of a control system according to a second embodiment of the present disclosure.
FIG. 10 is a flowchart illustrating an example of a failure detection process executed by a power receiver according to the second embodiment of the present disclosure.
FIG. 11 is a flowchart illustrating an example of a failure notification process executed by a server device according to the second embodiment of the present disclosure.
FIG. 12 is a diagram illustrating a configuration example of the control system according to the second embodiment of the present disclosure.
FIG. 13 is a diagram illustrating a configuration example of an insurance premium calculation device according to a third embodiment of the present disclosure.
FIG. 14 is a flowchart illustrating an example of a calculation process executed by the insurance premium calculation device according to the third embodiment of the present disclosure.
FIG. 15 is a block diagram depicting an example of schematic configuration of a vehicle control system.
FIG. 16 is a diagram of assistance in explaining an example of installation positions of an outside-vehicle information detecting section and an imaging section.

### Description of Embodiments

Hereinafter, embodiments of the present disclosure will be described with reference to the drawings. In each of the following embodiments, same parts are given the same reference signs to omit redundant description.

Hereinafter, the embodiments of the present disclosure will be described in the following order.
1. Description of problem
2. First embodiment
   2-1. Configuration of mobile body according to first embodiment
   2-2. Electromagnetic wave characteristics of mobile body according to first embodiment
   2-3. Configuration of control system according to first embodiment
   2-4. Route planning procedure according to first embodiment
   2-5. Travel detection procedure according to first embodiment
3. Modification 1 of first embodiment
   3-1. Configuration of control system according to Modification 1 of first embodiment
4. Modification 2 of first embodiment
   4-1. Configuration of control system according to Modification 2 of first embodiment
5. Second embodiment
   5-1. Configuration of control system according to second embodiment
   5-2. Failure detection procedure according to second embodiment
   5-3. Failure notification procedure according to second embodiment
6. Modification 1 of second embodiment
   6-1. Configuration of control system according to Modification 1 of second embodiment
7. Third embodiment
   7-1. Configuration of insurance premium calculation device according to third embodiment
   7-2. Calculation procedure according to third embodiment
8. Application example

### (1. Description of problem)

When a vehicle traveling by automated driving is exposed to a strong electromagnetic wave such as an interference radio wave, there is a possibility that an image used for automated driving is broken or an electronic control unit (ECU) for recognition malfunctions. As a result, it may become difficult to continue the automated driving. Similarly, a driving assistance may also be disturbed in a driving assistance system such as an advanced driving assistant system (ADAS).

A measure against electromagnetic waves has been taken by strengthening a shield that blocks electromagnetic waves. However, reinforcement of the shield causes an increase in cost. In addition, it is difficult to install a complete shield as a vehicle system becomes further complicated. Still more, when a system that performs wireless power feeding to the vehicle is mounted, there is a possibility that electromagnetic waves cannot be sufficiently blocked by the same shield as before. Furthermore, it is also assumed that a malicious person emits the electromagnetic wave to the vehicle in order to attack the vehicle.

Therefore, from the fail-safe viewpoint, there is a demand for a technique for shifting to the safe side when electromagnetic waves are radiated.

### (2. First embodiment)

### [2-1. Configuration of mobile body according to first embodiment]

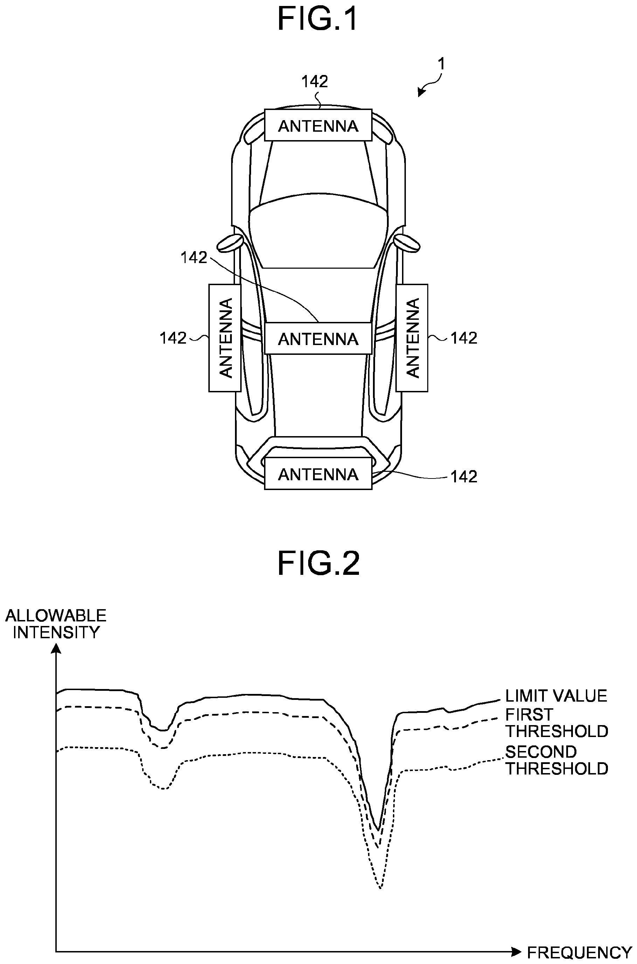

FIG. 1 is a top view illustrating an example of a schematic configuration of a mobile body 1 according to a first embodiment of the present disclosure. The mobile body 1 is a vehicle such as an automobile. In addition, the mobile body 1 is a vehicle automated at one of levels 0 to 5 defined by Society of Automotive Engineers (SAE). More specifically, the mobile body 1 may be a vehicle in which the mobile body 1 at level 3 autonomously controls traveling and can be operated by a driver on the mobile body 1 as necessary. In other words, the mobile body 1 may be a vehicle provided with a driving support system such as ADAS. Further, the mobile body 1 may be a vehicle that is highly automated at level 4 or above and does not require a driver to get on, or may be a vehicle at level 2 or below.

The mobile body 1 includes one or more antennas 142. The antenna 142 is used to receive the electromagnetic wave emitted to the mobile body 1. An electric signal output from the antenna 142 that has received the electromagnetic wave is used for diagnosis of an intensity of the electromagnetic wave. In addition, the antenna 142 has characteristics corresponding to electromagnetic wave characteristics of the mobile body 1. In other words, the antenna 142 is selected according to a frequency of a measurement target determined according to the electromagnetic wave characteristics of the mobile body 1, and a type of an electric field or a magnetic field. Furthermore, the antenna 142 may be configured by combining a plurality of types of antennas 142.

In the mobile body 1 illustrated in FIG. 1, one antenna 142 is installed at each of five locations of a front, rear, right side, left side, and ceiling. However, the mobile body 1 may not include the antennas 142 at all these locations, or may include the antennas 142 at other locations. For example, when the mobile body 1 has sufficient tolerance to the electromagnetic wave from a specific direction, the mobile body 1 may not include the antenna 142 that receives the electromagnetic wave from the corresponding direction. Furthermore, when there is a possibility that the electromagnetic wave is emitted from the ground by the wireless power feeding, the mobile body 1 may include the antenna 142 on a bottom surface. Furthermore, the number of antennas 142 provided in the mobile body 1 is not limited to five, and six or more antennas 142 or four or less antennas 142 may be provided.

In addition, in the mobile body 1, the electromagnetic wave intensity allowed by the mobile body 1 is set for each type of the mobile body 1 such as a model of the mobile body 1. The electromagnetic wave intensity permitted by the mobile body 1 can be measured by performing a limit test of electromagnetic wave irradiation according to an electromagnetic compatibility (EMC) test site.

### [2-2. Electromagnetic wave characteristics of mobile body according to first embodiment]

FIG. 2 is a graph illustrating an example of electromagnetic wave characteristics of the mobile body 1. In the graph illustrated in FIG. 2, a vertical axis represents an allowable intensity of the mobile body 1, and a horizontal axis represents a frequency. The allowable intensity is expressed in dBV/m when a target is an electric field, and is expressed in dBA/m when the target is a magnetic field. The graph illustrated in FIG. 2 indicates the allowable intensity of the mobile body 1 at each frequency. As illustrated in FIG. 2, the allowable intensity includes a limit value, a first threshold lower in intensity than the limit value, and a second threshold lower in intensity than the first threshold. The limit value is an upper limit of the allowable intensity of the mobile body 1. The first threshold is a value between the limit value and the second threshold in the allowable intensity of the mobile body 1. The second threshold is a value that becomes a starting point of exiting from an area assuming that the area has high electromagnetic wave intensity.

When the allowable intensity is lower than the limit value, the mobile body 1 can be automatically driven. However, when the intensity is the limit value, the mobile body 1 may execute an unexpected process such as a sudden stop. Therefore, in order to prevent the unexpected process, the mobile body 1 stops in a safe place when the electromagnetic wave of the first threshold or above is emitted to the mobile body 1. In addition, the mobile body 1 executes a process of shifting to a safety side when the intensity is equal to or greater than the second threshold. In other words, the second threshold in FIG. 2 is a threshold for determining that the electromagnetic wave is an abnormal electromagnetic wave that may adversely affect the mobile body 1.

### [2-3. Configuration of control system according to first embodiment]

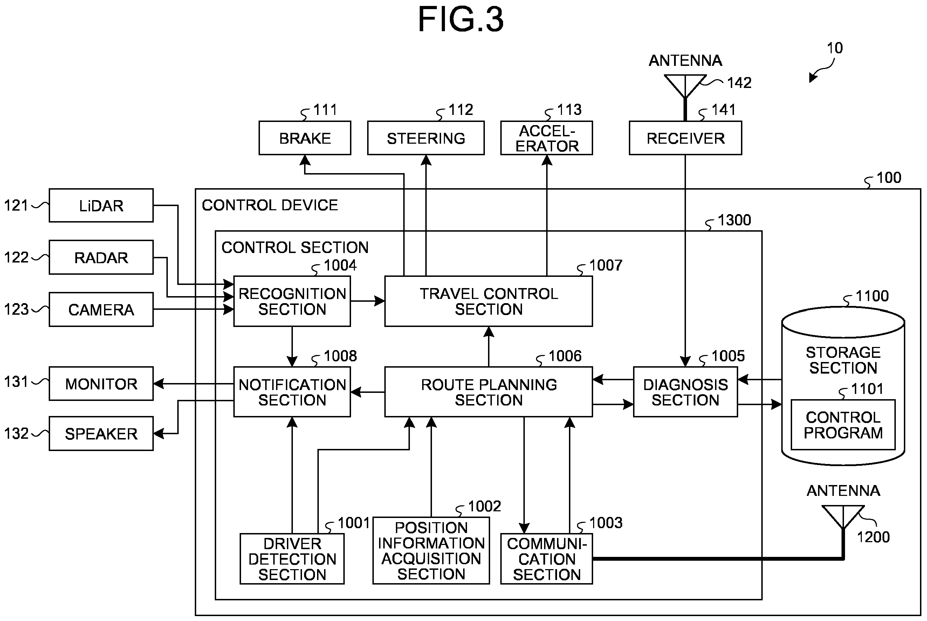

FIG. 3 is a diagram illustrating a configuration example of a control system 10 according to the first embodiment of the present disclosure. The control system 10 is a system that controls traveling of the mobile body 1. The control system 10 includes a brake 111, a steering 112, an accelerator 113, a light detection and ranging (LiDAR) 121, a radar 122, a camera 123, a monitor 131, a speaker 132, a receiver 141, the antenna 142, and a control device 100.

The brake 111 stops the mobile body 1 according to control by the control device 100. The steering 112 changes a traveling direction of the mobile body 1 according to the control by the control device 100. The accelerator 113 accelerates the mobile body 1 according to the control by the control device 100.

The LiDAR 121 emits laser light to an object while scanning the object, and observes scattered and reflected light from the object to measure a distance to the object and identify a property of the object. Then, the LiDAR 121 outputs LiDAR information indicating an observation result to the control device 100.

The radar 122 emits a radio wave to the object and observes reflection from the object to acquire a distance to the object or the like. Then, the radar 122 outputs radar information indicating an observation result to the control device 100.

The camera 123 captures an image in an imaging area. Then, the camera 123 outputs captured image information to the control device 100.

The monitor 131 is a display device that displays image information output from the control device 100. The speaker 132 is an output device that outputs audio information output from the control device 100.

The receiver 141 is connected to the antenna 142 that receives the electromagnetic wave. The antenna 142 is a device that generates an electric signal when exposed to the electromagnetic wave. The receiver 141 outputs the electric signal indicating the electromagnetic wave received by the antenna 142 to the control device 100. The electric signal is used to diagnose the intensity of the electromagnetic wave.

The control device 100 controls the control system 10. The control device 100 includes a storage section 1100, an antenna 1200, and a control section 1300.

The storage section 1100 is a data readable/writable storage device such as a dynamic random access memory (DRAM), a static random access memory (SRAM), a flash memory, a hard disk. The storage section 1100 functions as a storage medium of the control device 100. The storage section 1100 stores, for example, a control program 1101. The control program 1101 is a program for causing a computer or the like to execute various functions of the control device 100.

The antenna 1200 is a device that transmits and receives electromagnetic waves. The antenna 1200 performs communication with a server device 200.

The control section 1300 is a controller that controls each part of the control device 100. The control section 1300 is realized by, for example, a processor such as a central processing unit (CPU) or a micro processing unit (MPU). For example, the control section 1300 is realized by a processor executing various programs such as the control program 1101 stored in a storage device such as the storage section 1100 using a random access memory (RAM) or the like as a work area. Note that all or a part of the control section 1300 may be realized by an integrated circuit such as an application specific integrated circuit (ASIC) or a field programmable gate array (FPGA). Any of the CPU, the MPU, the ASIC, and the FPGA can be regarded as the controller.

The control section 1300 includes a driver detection section 1001, a position information acquisition section 1002, a communication section 1003, a recognition section 1004, a diagnosis section 1005, a route planning section 1006, a travel control section 1007, and a notification section 1008.

The driver detection section 1001 determines whether or not there is a driver who can drive the mobile body 1. For example, when a preset driver's license is read, the driver detection section 1001 determines that there is a driver who can drive the mobile body 1. Alternatively, when the driver detection section 1001 does not detect alcohol from a breath of an occupant seated in a driver's seat, the driver detection section 1001 determines that there is a driver who can drive the mobile body 1. Note that the driver detection section 1001 is not limited to these determination methods, and may determine whether or not there is a driver who can drive the mobile body 1 by another method.

The position information acquisition section 1002 receives position information indicating a current position of the mobile body 1 from a system that measures the current position of the mobile body 1, such as a global navigation satellite system (GNSS). The position information acquisition section 1002 may acquire the position information not only from the GNSS but also from another system.

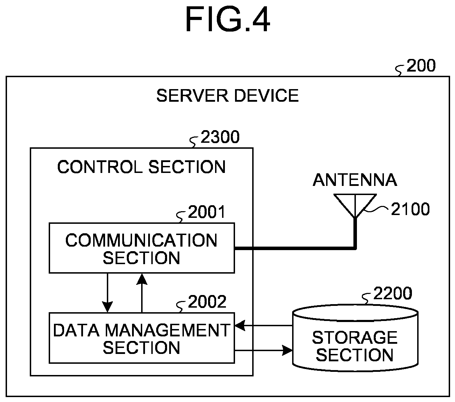

The communication section 1003 executes communication with the server device 200 (see FIG. 4) and other vehicles via the antenna 1200. For example, the communication section 1003 receives map information indicating a map used in a car navigation system. The map information includes information indicating a road on which the mobile body 1 can travel and a parking area such as a parking lot or a road shoulder where the mobile body 1 can park.

In addition, the communication section 1003 receives travelable information indicating a travelable area that is an area where the mobile body 1 can travel. Furthermore, the communication section 1003 receives travel prohibition information indicating a travel prohibited area that is an area where the mobile body 1 is prohibited to travel. The travel prohibition information includes center electromagnetic wave information and outer edge electromagnetic wave information.

The center electromagnetic wave information is information indicating the electromagnetic wave characteristics at a center point in the travel prohibited area. The center electromagnetic wave information includes electromagnetic wave characteristic information, coordinate information, and date and time information. The electromagnetic wave characteristic information is information indicating the electromagnetic wave intensity at each frequency as in the graph in FIG. 2. The coordinate information is information indicating coordinates of the center point in the travel prohibited area. The date and time information is information indicating a date and time when the electromagnetic wave intensity at each frequency is measured.

The outer edge electromagnetic wave information is information indicating electromagnetic wave characteristics of at least one point on an outer edge of the travel prohibited area. The outer edge electromagnetic wave information includes electromagnetic wave characteristic information, coordinate information, and date and time information. The electromagnetic wave characteristic information is information indicating the electromagnetic wave intensity at each frequency as in the graph in FIG. 2. The coordinate information is information indicating coordinates of at least one point on the outer edge of the travel prohibited area. The date and time information is information indicating a date and time when the electromagnetic wave intensity at each frequency is measured.

Here, the travelable information is used to calculate a moving route on which the mobile body 1 can travel. In addition, the mobile body 1 can travel as long as it is outside the travel prohibited area. Therefore, the communication section 1003 may receive the travel prohibition information instead of the travelable information.

The recognition section 1004 recognizes an environment around the mobile body 1. More specifically, the recognition section 1004 recognizes the environment around the mobile body 1 based on the LiDAR information, the radar information, the image information, and the like. However, the LiDAR information, the radar information, and the image information will be damaged when the mobile body 1 is exposed to the electromagnetic wave equal to or greater than the limit value at each frequency illustrated in FIG. 2. Therefore, when the mobile body 1 is exposed to the electromagnetic wave of the limit value or above, the recognition section 1004 cannot normally recognize the surrounding environment of the mobile body 1.

The diagnosis section 1005 diagnoses the intensity of the electromagnetic wave emitted to the mobile body 1 while traveling based on a recognition result of the recognition section 1004. In other words, the diagnosis section 1005 diagnoses the presence of emission of the electromagnetic wave having an intensity that may cause the recognition section 1004 to erroneously recognize the surrounding environment of the mobile body 1. More specifically, the diagnosis section 1005 diagnoses the intensity of the electromagnetic wave emitted to the mobile body 1 based on the electric signal output from the receiver 141. The diagnosis section 1005 diagnoses the intensity of the electromagnetic wave emitted to the mobile body 1 based on the electric signal output from the antenna 1200. Specifically, similarly to the electromagnetic wave characteristics in FIG. 2, the diagnosis section 1005 diagnoses the presence of emission of the electromagnetic wave having an intensity equal to or greater than the threshold according to the allowable intensity of the electromagnetic wave at each frequency set for each type of the mobile body 1. The electromagnetic wave having the intensity equal to or greater than the threshold is an abnormal electromagnetic wave that adversely affects the mobile body 1, such as the second threshold in FIG. 2.

In addition, the diagnosis section 1005 causes the storage section 1100 or the like to store an area where the electromagnetic wave having the intensity equal to or greater than the threshold has been detected as the travel prohibited area. Note that the diagnosis section 1005 may store the travel prohibited area not only in the storage section 1100 of the own apparatus but also in a storage section 2200 or the like of the server device 200. Specifically, the diagnosis section 1005 stores the travel prohibition information including the frequency and intensity of the electromagnetic wave in the travel prohibited area in the storage section 1100 of the own apparatus, the storage section 2200 of the server device 200, or the like.

Here, even when the diagnosis section 1005 determines that the electromagnetic wave having the intensity equal to or greater than the threshold is emitted, there is a possibility that erroneous detection is caused due to a failure or the like of a function of diagnosing the electromagnetic wave. Therefore, the diagnosis section 1005 stores the travel prohibited area in the storage section 1100 of the own apparatus, the storage section 2200 of the server device 200, or the like based on the diagnosis result at a first point and the diagnosis result at a second point.

First, the diagnosis section 1005 measures the intensity of the electromagnetic wave based on the electric signal output from the receiver 141 at the first point. In addition, the diagnosis section 1005 stores the electromagnetic wave characteristic information measured, the coordinate information indicating the first point, and the date and time information indicating a date and time of measurement in the storage section 1100 as the center electromagnetic wave information. Note that the diagnosis section 1005 may cause the communication section 1003 to transmit the center electromagnetic wave information to be stored in the storage section 2200 or the like of the server device 200. Furthermore, the diagnosis section 1005 may cause the communication section 1003 to transmit the center electromagnetic wave information to be stored in a storage device or the like of another vehicle.

In addition, the diagnosis section 1005 determines whether the intensity of the electromagnetic wave measured at the first point is the electromagnetic wave having the intensity equal to or greater than the second threshold in FIG. 2. When it is diagnosed that the electromagnetic wave having the intensity equal to or greater than the second threshold is emitted, the diagnosis section 1005 determines whether or not the intensity is less than the first threshold at which the control system 10 can continue the operation. In other words, the diagnosis section 1005 determines whether the intensity of the electromagnetic wave is less than the first threshold. When the intensity of the electromagnetic wave is equal to or greater than the first threshold, the diagnosis section 1005 determines that the operation of the control system 10 cannot be continued.

When the control system 10 can continue the operation, the mobile body 1 travels to the second point. Here, the second point is a point where the intensity of the electromagnetic wave is assumed to be equal to or less than the first threshold. For example, the second point is the most recent point where the intensity of the electromagnetic wave has been equal to or less than the first threshold, a point where the intensity of the electromagnetic wave measured by another vehicle is equal to or less than the first threshold, or a point sufficiently away from the first point.

In addition, the diagnosis section 1005 diagnoses whether or not the intensity of the electromagnetic wave has improved at the second point based on the electric signal output from the receiver 141. In other words, the diagnosis section 1005 diagnoses whether the intensity of the electromagnetic wave at the second point is less than the intensity of the electromagnetic wave at the first point or less than the second threshold. When the diagnosis section 1005 diagnoses that the electromagnetic wave intensity has improved at the second point, the electromagnetic wave characteristic information measured, the coordinate information indicating the second point, and the date and time information indicating the date and time of measurement are stored in the storage section 1100 as the outer edge electromagnetic wave information. Note that the diagnosis section 1005 may cause the communication section 1003 to transmit the outer edge electromagnetic wave information to be stored in the storage section 2200 or the like of the server device 200. Furthermore, the diagnosis section 1005 may cause the communication section 1003 to transmit the outer edge electromagnetic wave information to be stored in a storage device or the like of another vehicle.

On the other hand, when the electromagnetic wave intensity has not improved at the second point, the diagnosis section 1005 determines that there is a failure in the function of diagnosing the electromagnetic wave. In other words, when the intensity of the electromagnetic wave does not decrease at the second point, the diagnosis section 1005 determines that there is a failure in the function of diagnosing the electromagnetic wave.

Further, the diagnosis section 1005 sets a circle whose radius is a distance from the first point to the second point and the first point is the center as the travel prohibited area. In other words, the diagnosis section 1005 sets an area indicated by the center electromagnetic wave information and the outer edge electromagnetic wave information as the travel prohibited area. Then, the diagnosis section 1005 causes the communication section 1003 to transmit the travel prohibition information including the center electromagnetic wave information and the outer edge electromagnetic wave information, thereby causing the storage section 2200 of the server device 200 or the storage device of another vehicle to store the travel prohibited area. As described above, when the diagnosis section 1005 diagnoses that the mobile body 1 is exposed to the electromagnetic wave having the intensity equal to or greater than the threshold at the first point and the intensity of the electromagnetic wave emitted to the mobile body 1 decreases at the second point at which the intensity of the electromagnetic wave is assumed to decrease, the diagnosis section 1005 stores the travel prohibited area in the storage section 1100 of the own apparatus, the storage section 2200 of the server device 200, or the like. Accordingly, the diagnosis section 1005 can reduce the possibility of registering the travel prohibited area according to an erroneous diagnosis result.

The route planning section 1006 determines a moving route of the mobile body 1 based on the diagnosis result of the diagnosis section 1005. In other words, the route planning section 1006 acquires the moving route on which the mobile body 1 can travel to a destination without passing through the travel prohibited area. More specifically, the route planning section 1006 acquires, based on the map information, the moving route on which the mobile body 1 can travel from a current position indicated by the position information to the destination without passing through the travel prohibited area. When the travel prohibited area is set by the diagnosis section 1005, the route planning section 1006 acquires a moving route on which the vehicle can move from the second point to the destination without passing through the travel prohibited area.

Here, in the case of manual driving, the driver recognizes the surrounding environment of the mobile body 1. Therefore, there is no problem even when the recognition section 1004 cannot recognize the surrounding environment due to the electromagnetic wave having the intensity equal to or greater than the threshold. When it is difficult to acquire the moving route allowing movement to the destination without passing through the travel prohibited area, the route planning section 1006 determines whether or not it is possible to acquire a moving route allowing movement to the destination by manual driving. In other words, the route planning section 1006 determines whether or not it is possible to acquire the moving route allowing movement to the destination through the travel prohibited area.

When it is possible to acquire the moving route allowing movement to the destination through the travel prohibited area, the route planning section 1006 determines whether or not the driver capable of driving the mobile body 1 is detected by the driver detection section 1001. When the driver capable of driving the mobile body 1 is detected by the driver detection section 1001, the route planning section 1006 acquires the moving route allowing movement to the destination through the travel prohibited area.

When the mobile body 1 cannot travel to the destination even when passing through the travel prohibited area or when the driver capable of driving the mobile body 1 is not detected by the driver detection section 1001, the route planning section 1006 acquires a moving route for moving to a parking area indicated in the map information. In other words, the route planning section 1006 causes the mobile body 1 to park in a safe place because it is not possible to move to the destination.

The travel control section 1007 controls traveling of the mobile body 1 on the moving route acquired by the route planning section 1006 according to an external environment of the mobile body 1 recognized by the recognition section 1004. More specifically, the travel control section 1007 controls the brake 111, the steering 112, and the accelerator 113 in accordance with the external environment of the mobile body 1 recognized by the recognition section 1004 while traveling on the moving route acquired by the route planning section 1006.

In addition, the travel control section 1007 changes the automated driving level when the diagnosis section 1005 diagnoses that the mobile body 1 is exposed to the electromagnetic wave having the intensity equal to or greater than the threshold. Here, when the diagnosis section 1005 diagnoses that the mobile body 1 is exposed to the electromagnetic wave having the intensity equal to or greater than the threshold, the route planning section 1006 determines whether or not the mobile body 1 can travel to the destination without passing through the travel prohibited area. Still more, when the vehicle cannot travel to the destination without passing through the travel prohibited area, the route planning section 1006 determines whether or not the vehicle can travel to the destination by manual driving. The travel control section 1007 changes the automated driving level defined by SAE when the vehicle can move to the destination by manual driving. For example, the travel control section 1007 changes the level from level 5 or 4 to any of levels 3 to 1. Furthermore, the travel control section 1007 may switch to the automated driving after passing through the travel prohibited area. Therefore, the travel control section 1007 may change the automated driving level after passing through the travel prohibited area. For example, the travel control section 1007 changes any of levels 3 to 1 to level 5 or 4.

The notification section 1008 controls the monitor 131 and the speaker 132 to notify an occupant of the mobile body 1 of various types of information. In other words, the notification section 1008 makes a notification by causing the speaker 132 to output a voice notification or causing the monitor 131 to display a notification on a screen. For example, the notification section 1008 notifies that the mobile body 1 is stopped or parked because the electromagnetic wave equal to or greater than the first threshold is emitted. Alternatively, when the intensity of the electromagnetic wave does not improve at the second point, the notification section 1008 notifies that there may be a failure in the function of diagnosing the electromagnetic wave. Alternatively, the notification section 1008 notifies switching to the manual driving or stopping or parking of the mobile body 1 since the mobile body 1 cannot travel to the destination without passing through the travel prohibited area. Furthermore, the notification section 1008 notifies that handover in which a base station to be communicated with the communication section 1003 will be switched.

FIG. 4 is a diagram illustrating a configuration example of the server device 200 according to the first embodiment of the present disclosure. The server device 200 includes an antenna 2100, the storage section 2200, and a control section 2300.

The antenna 2100 is a device that transmits and receives the electromagnetic wave. The antenna 2100 communicates with the control device 100.

The storage section 2200 is a storage device capable of reading and writing data, such as a DRAM, an SRAM, a flash memory, and a hard disk. The storage section 2200 functions as a storage means of the server device 200. The storage section 2200 stores, for example, the program, the map information, and the travelable information. The program is a program for causing a computer or the like to execute various functions of the server device 200.

The control section 2300 is a controller that controls each part of the server device 200. The control section 2300 is realized by, for example, a processor such as a CPU or an MPU. For example, the control section 2300 is realized by a processor executing various programs stored in a storage device such as the storage section 2200 using a RAM or the like as a work area. Note that all or a part of the control section 2300 may be realized by an integrated circuit such as ASIC or FPGA. Any of the CPU, the MPU, the ASIC, and the FPGA can be regarded as the controller.

The control section 2300 includes a communication section 2001 and a data management section 2002.

The communication section 2001 executes communication with the control device 100 of the mobile body 1 via the antenna 2100. For example, the communication section 2001 receives the travel prohibition information from the control device 100. Furthermore, the communication section 2001 transmits the map information to the control device 100. Furthermore, the communication section 2001 transmits the travelable information to the control device 100.

The data management section 2002 manages data stored in the storage section 2200. More specifically, when the communication section 2001 receives the travel prohibition information, the data management section 2002 stores the travel prohibition information in the storage section 2200. When the travelable information is requested, the data management section 2002 sets an area not prohibited by the travel prohibition information as a travelable area.

In addition, the data management section 2002 may set the travelable area according to the electromagnetic wave characteristics of the mobile body 1, which is a request source of the travelable information. Specifically, the data management section 2002 identifies, based on the travel prohibition information, an area in which the intensity of the electromagnetic wave emitted is less than the second threshold with respect to the mobile body 1, which is the request source of the travelable information. The data management section 2002 sets an area identified as the travelable area. Then, the data management section 2002 causes the communication section 2001 to transmit the travelable information indicating the travelable area set.

### [2-4. Route planning procedure according to first embodiment]

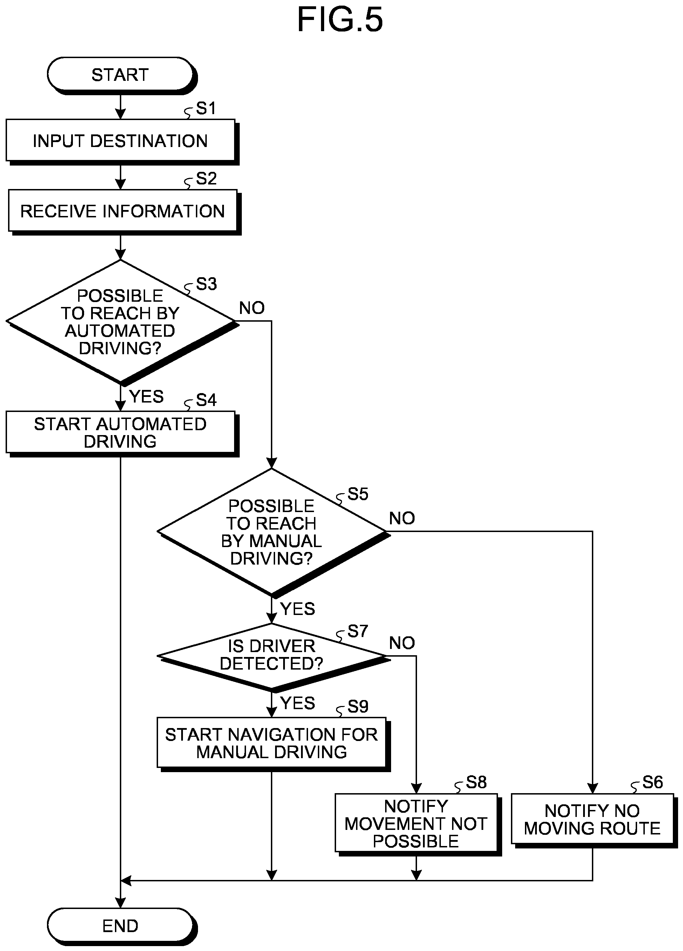

FIG. 5 is a flowchart illustrating an example of a route planning process executed by the control device 100 according to the first embodiment of the present disclosure.

The route planning section 1006 receives an input designating a destination (Step S1).

The communication section 2001 receives information to be used for navigation (Step S2). More specifically, the position information acquisition section 1002 receives the position information indicating the current position. Furthermore, the communication section 2001 receives the map information and the travelable information indicating the travelable area.

The route planning section 1006 determines whether or not the mobile body 1 can reach the destination by automated driving (Step S3). Specifically, the route planning section 1006 determines whether or not a moving route that allows the mobile body 1 to reach the destination by passing through the travelable area has been acquired. In other words, the route planning section 1006 determines whether or not the moving route that allows the mobile body 1 to reach the destination without passing through the travel prohibited area has been acquired.

When the mobile body 1 can reach the destination by automated driving (Step S3; Yes), the travel control section 1007 starts the automated driving to cause the mobile body 1 to travel to the destination (Step S4).

When the mobile body 1 cannot reach the destination by automated driving (Step S3; No), the route planning section 1006 determines whether or not the vehicle can reach the destination by manual driving (Step S5). In other words, the route planning section 1006 determines whether or not a moving route that allows the mobile body 1 to reach the destination by passing through the travel prohibited area has been acquired.

When the mobile body 1 cannot reach the destination by manual driving (Step S5; No), the notification section 1008 notifies that there is no moving route to reach the destination (Step S6).

When the mobile body 1 can reach the destination by manual driving (Step S5; Yes), the driver detection section 1001 determines whether or not a driver who can drive the mobile body 1 is detected (Step S7).

When the driver is not detected (Step S7; No), the notification section 1008 notifies that the vehicle cannot travel because the driver is not present (Step S8).

When the driver is detected (Step S7; Yes), the notification section 1008 notifies that navigation for manual driving will be started (Step S9).

Then, the control device 100 ends the route planning process.

### [2-5. Travel detection procedure according to first embodiment]

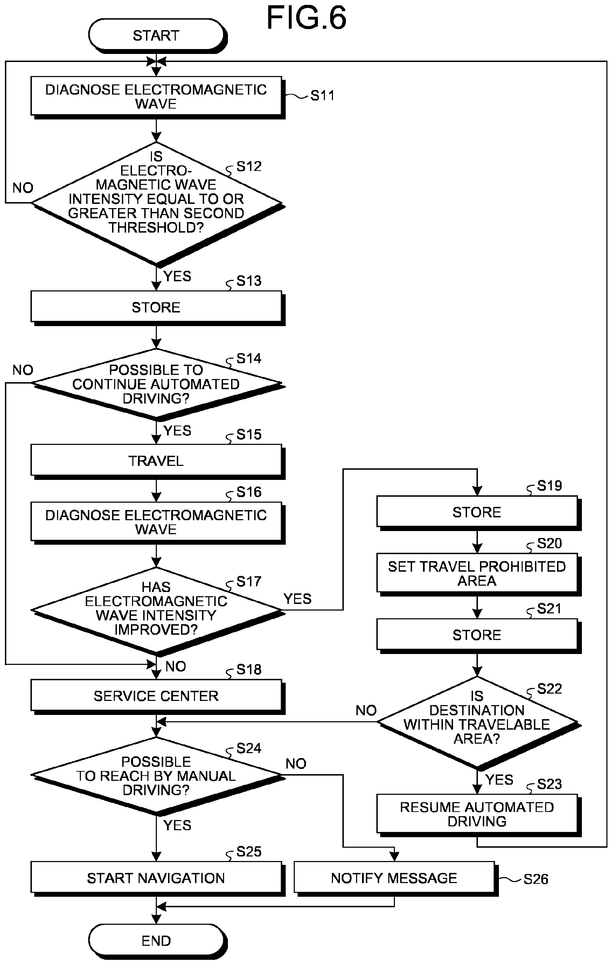

FIG. 6 is a flowchart illustrating an example of a travel detection process executed by the control device 100 according to the first embodiment of the present disclosure.

The diagnosis section 1005 diagnoses the intensity of the electromagnetic wave received by the antenna 1200 (Step S11). In other words, the diagnosis section 1005 measures the intensity of the electromagnetic wave emitted to the mobile body 1.

The diagnosis section 1005 determines whether or not a diagnosed intensity of the electromagnetic wave is equal to or greater than the second threshold (Step S12). When the intensity of the electromagnetic wave is less than the second threshold (Step S12; No), the diagnosis section 1005 proceeds to Step S11.

When the intensity of the electromagnetic wave is equal to or greater than the second threshold (Step S12; Yes), the diagnosis section 1005 stores the intensity as the center electromagnetic wave information in the storage section 1100 or the like (Step S13).

The diagnosis section 1005 determines whether or not the automated driving can be continued (Step S14). In other words, the diagnosis section 1005 determines whether the intensity of the electromagnetic wave is less than the first threshold.

When the automated driving cannot be continued (Step S14; No), the notification section 1008 notifies occurrence of problem (Step S18). More specifically, since the automated driving cannot be continued, the notification section 1008 notifies that the vehicle will be stopped in a safe place. Furthermore, the communication section 1003 notifies that a service center or the like where a service person who performs maintenance or management is present will be informed.

When the automated driving can be continued (Step S14; Yes), the travel control section 1007 causes the mobile body 1 to travel to the second point where the intensity of the electromagnetic wave is assumed to be improved (Step S15).

The diagnosis section 1005 diagnoses the intensity of the electromagnetic wave received by the antenna 1200 (Step S16). In other words, the diagnosis section 1005 measures the intensity of the electromagnetic wave emitted to the mobile body 1 at the second point.

The diagnosis section 1005 determines whether the intensity of the electromagnetic wave has improved (Step S17). In other words, the diagnosis section 1005 determines whether the diagnosed intensity of the electromagnetic wave is equal to or greater than the second threshold.

When the intensity of the electromagnetic wave has not improved (Step S17; No), the notification section 1008 notifies the occurrence of problem in Step S18. In other words, when the intensity of the electromagnetic wave is equal to or greater than the second threshold, the notification section 1008 notifies the occurrence of problem in Step S18. The intensity of the electromagnetic wave is supposed to be improved at the second point, but the intensity of the electromagnetic wave is not improved. Therefore, the notification section 1008 notifies that there may be a failure in the control device 100.

When the intensity of the electromagnetic wave is improved (Step S17; Yes), the diagnosis section 1005 stores information in the storage section 1100 as the outer edge electromagnetic wave information (Step S19). In other words, when the intensity of the electromagnetic wave is less than the second threshold, the diagnosis section 1005 stores information in the storage section 1100 as the outer edge electromagnetic wave information.

The diagnosis section 1005 sets an area identified by the center electromagnetic wave information and the outer edge electromagnetic wave information as the travel prohibited area (Step S20).

The communication section 1003 stores the travel prohibition information including the center electromagnetic wave information and the outer edge electromagnetic wave information in the storage section 1100 or the like (Step S21). Note that the diagnosis section 1005 may cause the communication section 1003 to transmit the travel prohibition information to be stored in the storage section 2200 or the like of the server device 200.

The route planning section 1006 determines whether or not the destination is within a range of the travelable area (Step S22). When the destination is within the range of the travelable area (Step S22; Yes), the travel control section 1007 resumes traveling by automated driving (Step S23). When the destination is not within the range of the travelable area (Step S22; No), the control device 100 proceeds to Step S24.

In Step S24, the route planning section 1006 determines whether or not the mobile body 1 can reach the destination by manual driving (Step S24).

When the mobile body 1 can reach the destination by manual driving (Step S24; Yes), the notification section 1008 starts navigation of a moving route for traveling to the destination by manual driving (Step S25).

When the mobile body 1 cannot reach the destination even by manual driving (Step S24; No), the notification section 1008 notifies a message indicating that the mobile body 1 cannot travel to the destination (Step S26) .

Then, the control device 100 ends the travel detection process.

As described above, according to the control device 100 of the first embodiment, the recognition section 1004 recognizes the environment around the mobile body 1 based on various types of information output from the LiDAR 121, the radar 122, or the camera 123. Further, the diagnosis section 1005 diagnoses whether or not the mobile body 1 is exposed to the electromagnetic wave having the intensity equal to or greater than the threshold based on the electric signal output from the antenna 142. The route planning section 1006 determines a moving route of the mobile body 1 based on the diagnosis result of the diagnosis section 1005. In other words, the route planning section 1006 determines a moving route that does not pass through the travel prohibited area that is an area where the mobile body 1 is exposed to the electromagnetic wave having the intensity equal to or greater than the threshold. As a result, the control device 100 can reduce the possibility that the mobile body 1 is exposed to the electromagnetic wave, such as the interference radio wave, having the intensity equal to or greater than the threshold, so that a system stop can be prevented.

### (3. Modification 1 of first embodiment)

### [3-1. Configuration of control system according to Modification 1 of first embodiment]

A control device 100a according to Change Example 1 of the first embodiment diagnoses the presence of emission of the electromagnetic wave, such as the interference radio wave, having the intensity equal to or greater than the threshold based on an error rate with respect to data in communication. The same components as those of the first embodiment are denoted by the same reference signs, and the description thereof will be omitted.

In the mobile body 1, a harness is spread over the entire mobile body 1. For example, a measurement device such as a sensor and a camera is connected to the ECU for recognition via the harness. The harness may generate noise when the harness is exposed to the electromagnetic wave, such as the interference radio wave, having the intensity equal to or greater than the threshold. When noise is generated, data transmitted by the harness may be damaged. Therefore, the control device 100a diagnoses the presence of emission of the electromagnetic wave, such as the interference radio wave, having the intensity equal to or greater than the threshold based on the error rate with respect to data in communication via the harness.

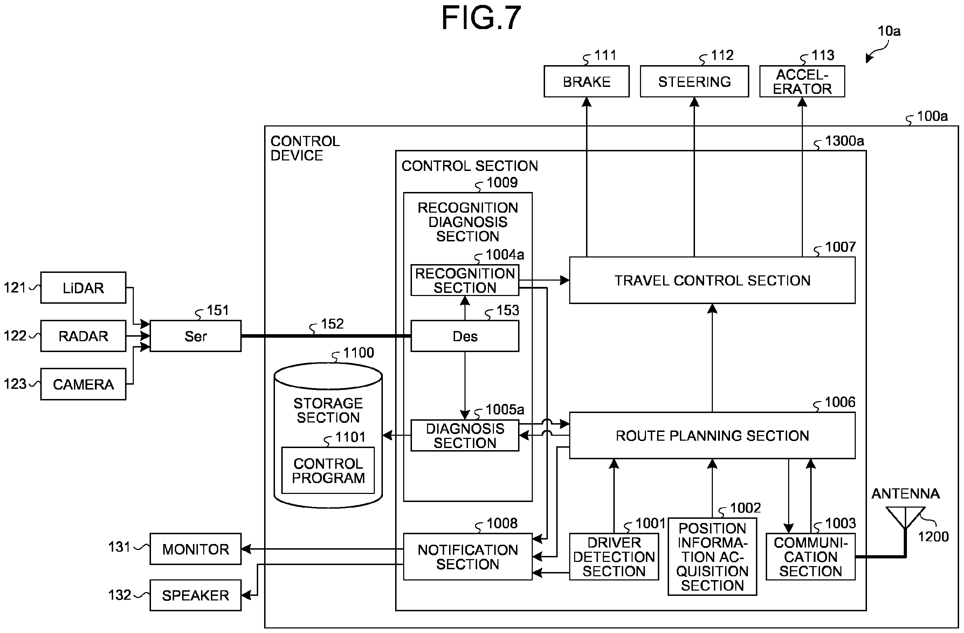

FIG. 7 is a diagram illustrating a configuration example of a control system 10a according to Modification 1 of the first embodiment of the present disclosure. Based on a bit error rate (BER) indicating a ratio of an error to data in low voltage differential signaling (LVDS), the control device 100a diagnoses the presence of emission of the electromagnetic wave, such as the interference radio wave, having the intensity equal to or greater than the threshold.

The control system 10a is different from the first embodiment in that the antenna 142 for receiving electromagnetic waves such as the interference radio wave is not provided. In addition, a control section 1300a is different from the first embodiment in that the control section 1300a includes a recognition diagnosis section 1009.

The brake 111, the steering 112, the accelerator 113, the LiDAR 121, the radar 122, the camera 123, the monitor 131, and the speaker 132 have functions similar to those of the first embodiment.

The LiDAR 121, the radar 122, and the camera 123 are connected to the recognition diagnosis section 1009 by LVDS. More specifically, the LiDAR 121, the radar 122, and the camera 123 are connected to a serializer (Ser) 151. The LiDAR 121, the radar 122, and the camera 123 transmit information such as LiDAR information, radar information, and image information to the Ser 151.

When receiving information from the LiDAR 121, the radar 122, and the camera 123, the Ser 151 serializes information such as the LiDAR information, the radar information, and the image information, and converts these pieces of information into serial data. Then, the Ser 151 outputs serialized serial data and test pattern data to a transmission path 152. The test pattern data is collation data for verifying whether an error has occurred in the LiDAR information, the radar information, and the image information.

The transmission path 152 is a harness such as a differential transmission path that transmits data in LVDS. The transmission path 152 is also a device that generates an electric signal when exposed to the electromagnetic wave. In other words, when the transmission path 152 is exposed to the electromagnetic wave, noise is generated. Data passing through the transmission path 152 may be damaged due to noise.

The recognition diagnosis section 1009 includes a deserializer (Des) 153, a diagnosis section 1005a, and a recognition section 1004a.

The Des 153 receives the serialized serial data and the test pattern data via the transmission path 152. The Des 153 calculates the BER indicating a ratio of erroneous data to received serial data based on the test pattern data. Further, the Des 153 restores the serialized serial data to parallel data. As a result, the Des 153 acquires the LiDAR information, the radar information, and the image information. Then, the Des 153 outputs BER information indicating a BER value to the diagnosis section 1005a. The Des 153 also outputs the LiDAR information, the radar information, and the image information to the recognition section 1004a.

The diagnosis section 1005a diagnoses the intensity of the electromagnetic wave emitted to the mobile body 1 based on the error rate with respect to the data in the communication. Here, when the mobile body 1 is exposed to the electromagnetic wave, such as the interference radio wave, having the intensity equal to or greater than the threshold, data will be damaged due to noise generated in the transmission path 152 and the like. Therefore, the diagnosis section 1005a can estimate the intensity of the electromagnetic wave emitted to the mobile body 1 based on the BER value indicated by the BER information. In other words, the diagnosis section 1005a can diagnose the presence of emission of the electromagnetic wave having the intensity equal to or greater than the threshold based on the error rate with respect to the data in the communication.

When the intensity of the electromagnetic wave is estimated based on the BER information, the diagnosis section 1005a cannot specify a frequency of the electromagnetic wave emitted to the mobile body 1 because the electromagnetic wave is not measured. However, when the error rate indicated by the BER information is high, it is considered that a large amount of data is damaged due to irradiation with the electromagnetic wave at a frequency that the mobile body 1 has low tolerance. Therefore, the diagnosis section 1005a estimates that the electromagnetic wave having a frequency at which the mobile body 1 has low tolerance is emitted based on electromagnetic wave intensity characteristics of the mobile body 1.

In addition, the diagnosis section 1005a stores the BER information, the coordinate information, and the date and time information in the storage section 1100 as the center electromagnetic wave information. Instead of the BER information, the diagnosis section 1005a may store the electromagnetic wave characteristic information indicating irradiation of the electromagnetic wave having an estimated intensity at an estimated frequency, the coordinate information, and the date and time information in the storage section 1100 as the center electromagnetic wave information.

Similarly, the diagnosis section 1005a stores the BER information, the coordinate information, and the date and time information in the storage section 1100 as the outer edge electromagnetic wave information. Further, instead of the BER information, the diagnosis section 1005a may store the electromagnetic wave characteristic information indicating irradiation of the electromagnetic wave having the estimated intensity at the estimated frequency, the coordinate information, and the date and time information in the storage section 1100 as the outer edge electromagnetic wave information.

Note that, when there is a plurality of candidate frequencies, the diagnosis section 1005a does not limit frequencies. In other words, the diagnosis section 1005a stores the electromagnetic wave characteristic information indicating irradiation of the electromagnetic wave having an estimated intensity at each of candidate frequencies. As a result, when another mobile body 1 uses the travel prohibition information, it is possible to use the travel prohibition information as a decision material for setting an area as the travel prohibited area.

The recognition section 1004a has a function similar to that of the first embodiment.

The driver detection section 1001, the position information acquisition section 1002, the communication section 1003, the route planning section 1006, the travel control section 1007, and the notification section 1008 have functions similar to those of the first embodiment.

The control device 100a executes a route planning process similar to that of the first embodiment.

The control device 100a executes the travel detection process similar to that of the first embodiment. However, Modification 1 is different from the first embodiment in that the BER information or the electromagnetic wave characteristic information is included in the center electromagnetic wave information and the outer edge electromagnetic wave information.

As described above, according to the control device 100a of Modification 1 of the first embodiment, the recognition section 1004a recognizes the environment around the mobile body 1 based on various types of information output from the LiDAR 121, the radar 122, or the camera 123. In addition, the diagnosis section 1005a diagnoses the intensity of the electromagnetic wave with which the mobile body 1 is emitted based on the BER included in the BER information. In this manner, the control device 100a can diagnose the presence of emission of the electromagnetic wave having the intensity equal to or greater than the threshold even without special hardware such as the antenna 142 of the first embodiment.

### (4. Modification 2 of first embodiment)

### [4-1. Configuration of control system according to Modification 2 of first embodiment]

A control device 100b according to Change Example 2 of the first embodiment diagnoses the presence of emission of the electromagnetic wave, such as the interference radio wave, having the intensity equal to or greater than the threshold based on a data loss rate in communication. The same components as those of the first embodiment are denoted by the same reference signs, and the description thereof will be omitted.

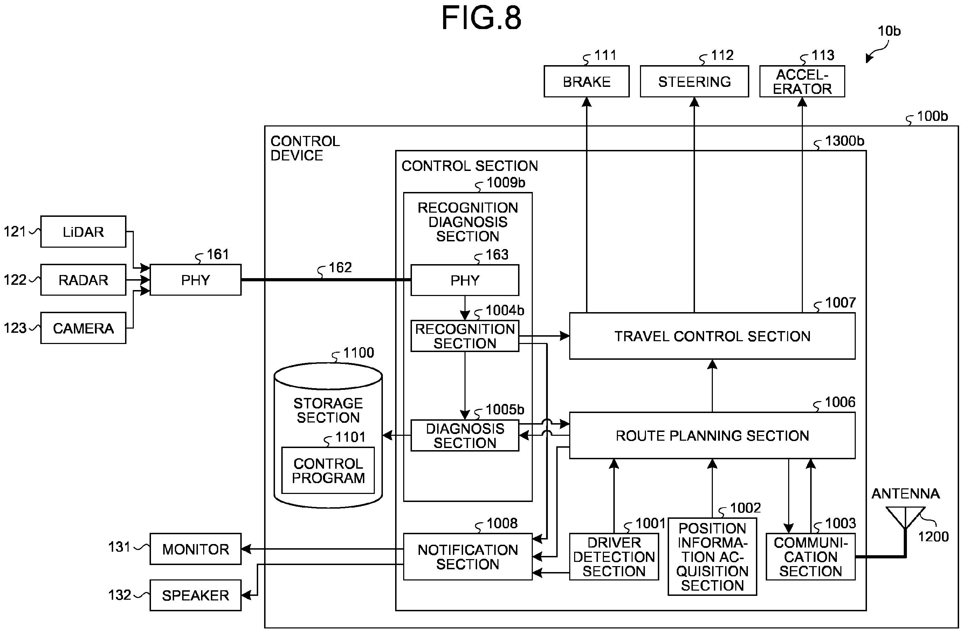

FIG. 8 is a diagram illustrating a configuration example of a control system 10b according to Modification 2 of the first embodiment of the present disclosure. The control device 100b diagnoses the presence of emission of the electromagnetic wave, such as the interference radio wave, having the intensity equal to or greater than the threshold based on a packet loss rate (PLR) indicating a loss rate of a packet having data to be transmitted in communication based on Ethernet (registered trademark). In other words, the control device 100b diagnoses the presence of emission of the electromagnetic wave having the intensity equal to or greater than the threshold based on the packet loss rate.

The control system 10b is different from that of the first embodiment in that the antenna 142 for receiving electromagnetic waves such as interference radio waves is not provided. In addition, the control section 1300b is different from that of the first embodiment in that the control section 1300b includes a recognition diagnosis section 1009b.

The brake 111, the steering 112, the accelerator 113, the LiDAR 121, the radar 122, the camera 123, the monitor 131, and the speaker 132 have functions similar to those of the first embodiment.

The LiDAR 121, the radar 122, and the camera 123 are connected to the recognition diagnosis section 1009b by an Ethernet (registered trademark) cable. More specifically, the LiDAR 121, the radar 122, and the camera 123 are connected to a physical layer (PHY) 161. Then, the LiDAR 121, the radar 122, and the camera 123 transmit information such as the LiDAR information, the radar information, and the image information to the PHY 161.

When receiving information such as the LiDAR information, the radar information, and the image information, the PHY 161 outputs each packet of information to a transmission path 162 based on the Ethernet (registered trademark) standard.

The transmission path 162 is a harness such as a cable for transmitting the packet in Ethernet (registered trademark). The transmission path 162 is also a device that generates an electric signal when exposed to the electromagnetic wave. In other words, when the transmission path 162 is exposed to the electromagnetic wave, noise is generated. Data passing through the transmission path 162 may be damaged due to noise.

The recognition diagnosis section 1009b includes a PHY 163, a diagnosis section 1005b, and a recognition section 1004b.

The PHY 163 receives the packet via the transmission path 162. The PHY 163 outputs information such as the LiDAR information, the radar information, and the image information included in the packet received to the recognition section 1004b. The PHY 163 calculates PLR indicating a data loss rate. The PHY 163 outputs PLR information indicating a PLR value to the recognition section 1004b.

The recognition section 1004b has a function similar to that of the first embodiment. However, the recognition section 1004b is different from the first embodiment in that the PLR information is output to the diagnosis section 1005b.

The diagnosis section 1005b diagnoses the intensity of the electromagnetic wave emitted to the mobile body 1 based on the data loss rate in the communication. Here, when the mobile body 1 is exposed to the electromagnetic wave, such as the interference radio wave, having the intensity equal to or greater than the threshold, noise is generated in the transmission path 162 and the like, and thus the data will be damaged. In other words, the packet will be lost. Therefore, the diagnosis section 1005b can diagnose the presence of emission of the electromagnetic wave having the intensity equal to or greater than the threshold based on the PLR value indicated by the PLR information.

When the intensity of the electromagnetic wave is estimated based on the PLR information, the diagnosis section 1005b cannot specify a frequency of the electromagnetic wave emitted to the mobile body 1 because the electromagnetic wave is not measured. When the packet loss rate indicated by the PLR information is high, it is considered that many packets are lost because the electromagnetic wave at a frequency that the mobile body 1 has low tolerance is emitted. Therefore, the diagnosis section 1005b estimates that the electromagnetic wave having a frequency at which the mobile body 1 has low tolerance is emitted based on the electromagnetic wave intensity characteristics of the mobile body 1.

Further, the diagnosis section 1005b stores the PLR information, the coordinate information, and the date and time information in the storage section 1100 as the center electromagnetic wave information. Instead of the PLR information, the diagnosis section 1005b may store the electromagnetic wave characteristic information indicating irradiation of the electromagnetic wave having an estimated intensity at an estimated frequency, the coordinate information, and the date and time information in the storage section 1100 as the center electromagnetic wave information.

Similarly, the diagnosis section 1005b stores the PLR information, the coordinate information, and the date and time information in the storage section 1100 as the outer edge electromagnetic wave information. Further, instead of the PLR information, the diagnosis section 1005b may store the electromagnetic wave characteristic information indicating irradiation of the electromagnetic wave having the estimated intensity at the estimated frequency, the coordinate information, and the date and time information in the storage section 1100 as the outer edge electromagnetic wave information.

Note that, when there is a plurality of candidate frequencies, the diagnosis section 1005b does not limit frequencies. In other words, the diagnosis section 1005b stores the electromagnetic wave characteristic information indicating irradiation of the electromagnetic wave having an estimated intensity at each of candidate frequencies. As a result, when another mobile body 1 uses the travel prohibition information, it is possible to use the travel prohibition information as a decision material for setting an area as the travel prohibited area.

The driver detection section 1001, the position information acquisition section 1002, the communication section 1003, the route planning section 1006, the travel control section 1007, and the notification section 1008 have functions similar to those of the first embodiment.

The control device 100b executes the route planning process similar to that of the first embodiment.

The control device 100b executes travel detection processing similar to that of the first embodiment. However, Modification 2 is different from the first embodiment in that the PLR information or the electromagnetic wave characteristic information is included in the center electromagnetic wave information and the outer edge electromagnetic wave information.

As described above, according to the control device 100b of Modification 2 of the first embodiment, the recognition section 1004b recognizes the environment around the mobile body 1 based on various types of information output from the LiDAR 121, the radar 122, or the camera 123. Further, the diagnosis section 1005b diagnoses the intensity of the electromagnetic wave emitted to the mobile body 1 based on the PLR included in the PLR information. In this manner, the control device 100b can diagnose the presence of emission of the electromagnetic wave having the intensity equal to or greater than the threshold even without special hardware such as the antenna 142 of the first embodiment.

### (5. Second embodiment)

### [5-1. Configuration of control system according to second embodiment]

A control system 20 according to a second embodiment detects a device failure according to the intensity of electromagnetic wave emitted. The same components as those of the first embodiment are denoted by the same reference signs, and the description thereof will be omitted.

In the first embodiment, the possibility that the surrounding environment cannot be recognized is reduced by detecting the electromagnetic wave, such as the interference radio wave, having the intensity equal to or greater than the threshold. Here, a device that transmits the electromagnetic wave may unintentionally transmit the electromagnetic wave having the intensity equal to or greater than a threshold due to a failure. Therefore, the control system 20 detects the failure of the device that has transmitted the electromagnetic wave by detecting the electromagnetic wave having the intensity equal to or greater than the threshold.

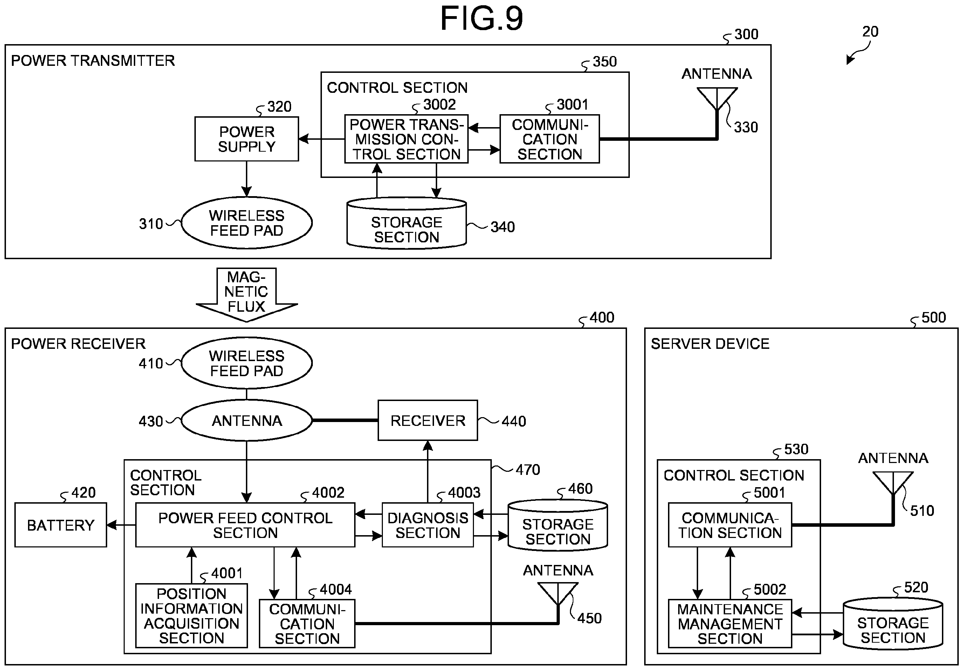

FIG. 9 is a diagram illustrating a configuration example of the control system 20 according to the second embodiment of the present disclosure. The control system 20 is an example of application to a wireless power feed system that feeds power in a wireless manner to a vehicle such as an automobile. The control system 20 includes a power transmitter 300, a power receiver 400, and a server device 500.

The power transmitter 300 is installed on a ground or the like, and wirelessly transmits power to the vehicle such as the automobile. The power transmitter 300 includes a wireless charging pad 310, a power supply section 320, an antenna 330, a storage section 340, and a control section 350.

The wireless charging pad 310 is a pad that generates a magnetic flux, such as a coil. The wireless charging pad 310 generates the magnetic flux using power of the power supply section 320 based on control by the control section 350. As a result, the wireless charging pad 310 transmits power to the power receiver 400.

The power supply section 320 is a power source for wirelessly transmitting power. The power supply section 320 may be an external power supply such as a commercial power supply, or may be a battery.

The antenna 330 is a device that transmits and receives the electromagnetic wave. The antenna 330 performs communication with the server device 500.

The storage section 340 is a storage device capable of reading and writing data, such as a DRAM, an SRAM, a flash memory, and a hard disk. The storage section 340 stores, for example, a program, map information, and travelable information. The program is a program for causing a computer or the like to execute various functions of the server device 500.

The control section 350 is a controller that controls each part of the power transmitter 300. The control section 350 is realized by, for example, a processor such as a CPU or an MPU. For example, the control section 350 is realized by a processor executing various programs stored in a storage device such as the storage section 340 using a RAM or the like as a work area. Note that all or a part of the control section 350 may be realized by an integrated circuit such as ASIC or FPGA. Any of the CPU, the MPU, the ASIC, and the FPGA can be regarded as the controller.

The control section 350 includes a communication section 3001 and a power transmission control section 3002.

The communication section 3001 executes communication with the server device 500 via the antenna 330. For example, the communication section 3001 transmits execution record information indicating a wireless power transmission log. The execution record information includes position information, power transmission information, and date and time information. The position information is information indicating a position where the power transmitter 300 is installed. When the server device 500 stores the position where the power transmitter 300 is installed, the execution record information may have identification information for identifying the power transmitter 300. The power transmission information is information indicating content of wireless power transmission. For example, the power transmission information includes information such as a power value, a voltage value, and a current value of wireless power transmission. The date and time information is information indicating a date and time when the wireless power transmission is executed.

The power transmission control section 3002 controls wireless power transmission. In addition, the power transmission control section 3002 generates the execution record information when the wireless power transmission is executed. Then, the power transmission control section 3002 causes the communication section 3001 to transmit the execution record information.

The power receiver 400 is installed in the vehicle such as the automobile, and receives power transmitted from the power transmitter 300. The power receiver 400 includes a wireless charging pad 410, a battery 420, an antenna 430, a receiver 440, an antenna 450, a storage section 460, and a control section 470.

The wireless charging pad 410 is a pad that receives power transmitted from the power transmitter 300. More specifically, the wireless charging pad 410 is a pad such as a coil that generates power by the magnetic flux generated by the power transmitter 300.

The battery 420 is a battery that stores electric power used by the vehicle such as the automobile. The power received by the wireless charging pad 410 is charged to the battery 420.

The antenna 430 is a device that generates an electric signal when exposed to the electromagnetic wave. The antenna 430 receives the electromagnetic wave in order to measure the intensity of the electromagnetic wave generated by the magnetic flux generated by the power transmitter 300.

The receiver 440 is connected to the antenna 450. The receiver 440 outputs, to the diagnosis section 4003, the electric signal indicating the electromagnetic wave received by the antenna 450.

The antenna 450 is a device that transmits and receives the electromagnetic wave. The antenna 450 performs communication with the server device 500.

The storage section 460 is a storage device capable of reading and writing data, such as a DRAM, an SRAM, a flash memory, and a hard disk. The storage section 460 stores, for example, the program, the map information, and the travelable information. The program is a program for causing a computer or the like to execute various functions of the power receiver 400.

The control section 470 is a controller that controls each part of the power receiver 400. The control section 470 is realized by, for example, a processor such as a CPU or an MPU. For example, the control section 470 is realized by a processor executing various programs stored in a storage device such as the storage section 460 using a RAM or the like as a work area. Note that all or a part of the control section 470 may be realized by an integrated circuit such as ASIC or FPGA. Any of the CPU, the MPU, the ASIC, and the FPGA can be regarded as the controller.

The control section 470 includes a position information acquisition section 4001, a power feed control section 4002, a diagnosis section 4003, and a communication section 4004.

The position information acquisition section 4001 has the same function as the position information acquisition section 1002 of the first embodiment.

The power feed control section 4002 controls wireless charging. More specifically, when the wireless charging pad 410 receives power, the power feed control section 4002 charges the battery 420 with the received power. In addition, when the wireless charging pad 410 receives power, the power feed control section 4002 requests the diagnosis section 4003 to diagnose a failure of the power transmitter 300.

The diagnosis section 4003 diagnoses a failure of the power transmitter 300 based on a signal indicating the intensity of the electromagnetic wave output from the receiver 440. More specifically, the diagnosis section 4003 determines whether the intensity of the electromagnetic wave is within a prescribed range. When the intensity of the electromagnetic wave is out of the range, the diagnosis section 4003 determines that the power transmitter 300 has failed. In addition, the diagnosis section 4003 generates failure detection information when it is determined that the power transmitter 300 has failed.

The failure detection information includes position information, intensity information, and date and time information. The position information is information indicating a position where it is determined that the power transmitter 300 has failed. The intensity information is information indicating the intensity of the electromagnetic wave determined that the power transmitter 300 has failed. The date and time information is information indicating a date and time when it is determined that the power transmitter 300 has failed. When the failure detection information is generated, the diagnosis section 4003 notifies the power feed control section 4002 that a failure has been detected.

The communication section 4004 controls the antenna 450 to communicate with the server device 500. When notified of failure detection from the power feed control section 4002, the communication section 4004 transmits the failure detection information to the server device 500.

When a failure of the wireless power feed system is detected, the server device 500 registers that maintenance for a failed point is necessary. The server device 500 includes an antenna 510, a storage section 520, and a control section 530.

The antenna 510 is a device that transmits and receives the electromagnetic wave. The antenna 510 performs communication with the power receiver 400.

The storage section 520 is a storage device capable of reading and writing data, such as a DRAM, an SRAM, a flash memory, and a hard disk. The storage section 520 stores, for example, a program. The program is a program for causing a computer or the like to execute various functions of the server device 500.

The control section 530 is a controller that controls each part of the server device 500. The control section 530 is realized by, for example, a processor such as a CPU or an MPU. For example, the control section 530 is realized by a processor executing various programs stored in a storage device such as the storage section 520 using a RAM or the like as a work area. Note that all or a part of the control section 530 may be realized by an integrated circuit such as ASIC or FPGA. Any of the CPU, the MPU, the ASIC, and the FPGA can be regarded as the controller.

The control section 530 includes a communication section 5001 and a maintenance management section 5002.

The communication section 5001 controls the antenna 510 to execute communication with the power transmitter 300 and the power receiver 400. The communication section 5001 receives the execution record information from the power transmitter 300. The communication section 5001 also receives the failure detection information from the power receiver 400.

When the communication section 5001 receives the execution record information, the maintenance management section 5002 stores the execution record information in the storage section 520. Similarly, when the communication section 5001 receives the failure detection information, the maintenance management section 5002 stores the failure detection information in the storage section 520.

Here, when the power transmitter 300 or the power receiver 400 erroneously detects a failure and registers a maintenance request of a target device, the maintenance staff will be performing unnecessary maintenance. Therefore, it is necessary for the maintenance management section 5002 to reduce the possibility of executing the maintenance request of the target device due to erroneous detection by the power transmitter 300 or the power receiver 400. Therefore, the maintenance management section 5002 determines whether to execute the maintenance request according to two-step determination.

More specifically, when receiving the failure detection information indicating detection of failure from the power receiver 400, the maintenance management section 5002 determines whether or not the failure detection information received from another power receiver 400 is stored in the storage section 520. In other words, the maintenance management section 5002 determines whether or not another failure detection information having position information that matches the position information included in the failure detection information is stored in the storage section 520. When the failure detection information received from another power receiver 400 is stored in the storage section 520, there is a low possibility that the power receiver 400 has erroneously detected a failure, and thus the maintenance management section 5002 executes the maintenance request.

When the failure detection information received from another power receiver 400 is not stored in the storage section 520, the maintenance management section 5002 determines whether the execution record information indicating that abnormal power transmission from the power transmitter 300 is stored. The execution record information indicating an abnormality is execution record information having transmission information indicating a power value, a voltage value, a current value, and the like that are out of a specified range. In other words, the maintenance management section 5002 determines whether the power transmission information indicating abnormal power transmission is included in the execution record information that matches the position information and the date and time information included in the failure detection information. When abnormal power transmission has been executed, the maintenance management section 5002 registers the maintenance request because there is a low possibility of erroneous detection of failure by the power receiver 400.

### [5-2. Failure detection procedure according to second embodiment]

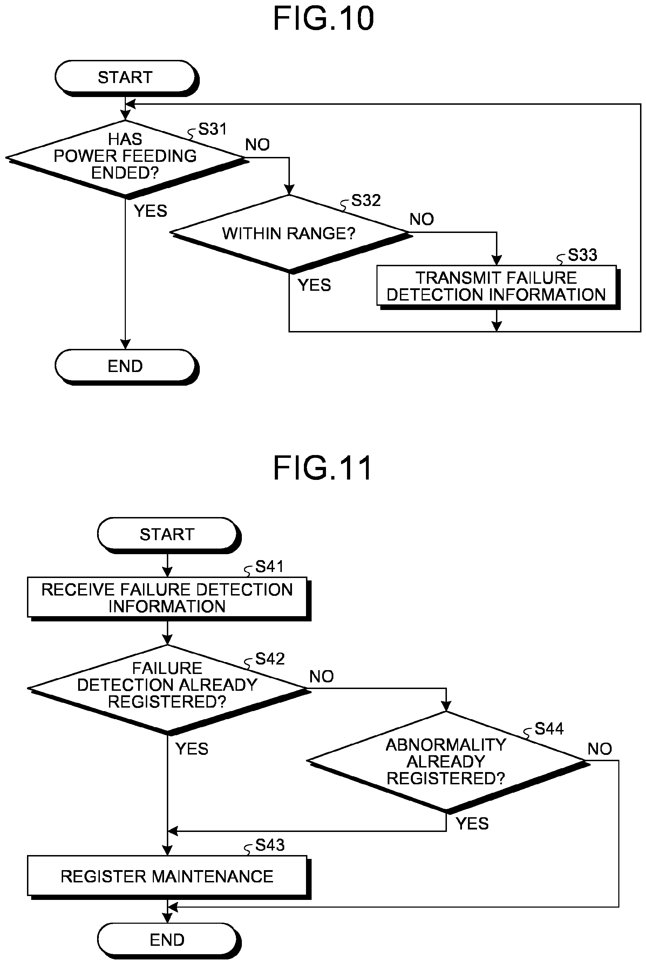

FIG. 10 is a flowchart illustrating an example of a failure detection process executed by the power receiver 400 according to the second embodiment of the present disclosure.

The power feed control section 4002 determines whether or not the wireless power feeding has ended (Step S31) .

When the wireless power feeding has not ended (Step S31; No), the diagnosis section 4003 determines whether the intensity of the electromagnetic wave is within a prescribed range based on a signal output from the receiver 440 (Step S32).

When the intensity of the electromagnetic wave is within the prescribed range (Step S32; Yes), the power receiver 400 proceeds to Step S31.

When the intensity of the electromagnetic wave is out of the prescribed range (Step S32; No), the communication section 4004 transmits the failure detection information generated by the diagnosis section 4003 to the server device 500 (Step S33).

When the wireless power feeding has ended (Step S31; Yes), the power receiver 400 ends the failure detection process.

### [5-3. Failure notification procedure according to second embodiment]

FIG. 11 is a flowchart illustrating an example of a failure notification process executed by the server device 500 according to the second embodiment of the present disclosure.

The communication section 5001 receives the failure detection information (Step S41).

The maintenance management section 5002 determines whether failure detection by another vehicle or the like is registered for the position indicated by the position information included in received failure detection information (Step S42). In other words, the maintenance management section 5002 determines whether failure detection information having position information that matches the position information included in the received failure detection information is stored in the storage section 520.

When the failure detection has already been registered (Step S42; Yes), the maintenance management section 5002 registers that maintenance is necessary (Step S43) .

When the failure detection is not registered (Step S42; No), the maintenance management section 5002 determines whether or not the execution record information indicating abnormality is stored in the vicinity where the failure has been detected (Step S44). In other words, the maintenance management section 5002 determines whether or not the position indicated by the position information included in the failure detection information matches, the date and time indicated by the date and time information matches, and the execution record information including the power transmission information indicating abnormality is stored in the storage section 520.

When the execution record information indicating abnormality is stored (Step S44; Yes), the maintenance management section 5002 proceeds to Step S43 and registers that maintenance is necessary.

When the execution record information indicating abnormality is not stored (Step S44; No), the server device 500 suspends the failure registration and ends the failure notification process. As a result, the server device 500 executes the maintenance request when another vehicle or the like detects a failure.

As described above, according to the power receiver 400 of the second embodiment, the diagnosis section 4003 diagnoses whether or not the power transmitter 300 emits an unexpected electromagnetic wave based on the electric signal output from the antenna 430 that receives the electromagnetic wave relating to the wireless power feeding. As a result, the power receiver 400 can detect the failure of the power transmitter 300 based on whether the power transmitter 300 is emitting the unexpected electromagnetic wave.

### (6. Modification 1 of second embodiment)

### [6-1. Configuration of control system according to Modification 1 of second embodiment]

A control system 20a according to Modification 1 of the second embodiment detects a failure of a device according to the intensity of the emitted electromagnetic wave. The same components as those of the first embodiment are denoted by the same reference signs, and the description thereof will be omitted.

In Modification 1 of the second embodiment, a failure of a base station is detected according to the intensity of the electromagnetic wave transmitted from the base station in mobile communication. The control system 20a is an example of application to a mobile communication system that executes communication between devices mounted on a smartphone and a vehicle.

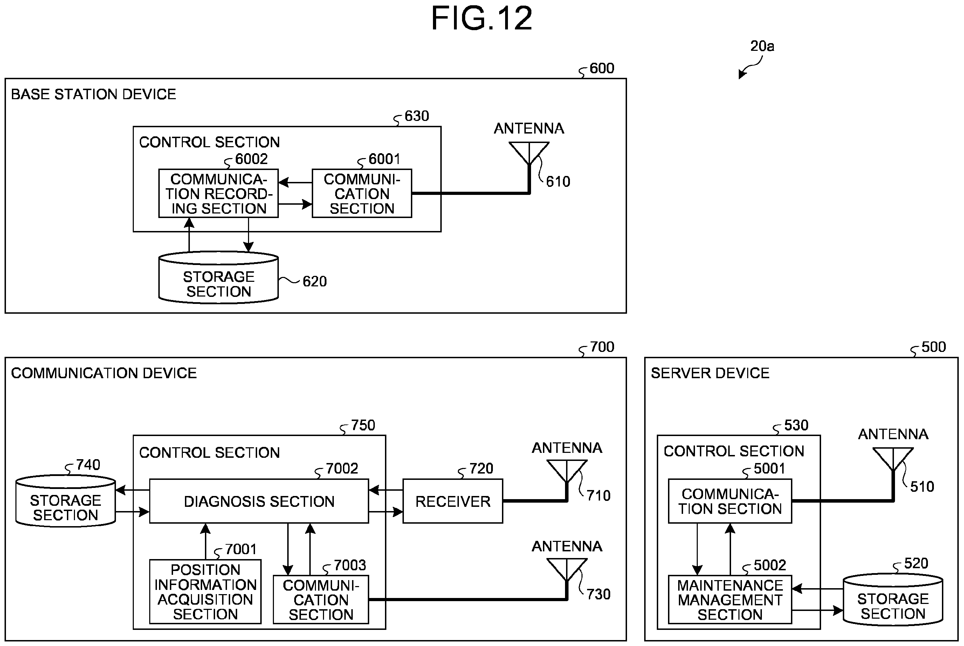

FIG. 12 is a diagram illustrating a configuration example of the control system 20a according to the second embodiment of the present disclosure. The control system 20a includes a base station device 600, a communication device 700, and the server device 500.

The base station device 600 is a device that is installed in the base station and relays communication between communication devices 700. The base station device 600 includes an antenna 610, a storage section 620, and a control section 630.

The antenna 610 is a device that transmits and receives the electromagnetic wave. The antenna 610 performs communication with the communication device 700.

The storage section 620 is a storage device capable of reading and writing data, such as a DRAM, an SRAM, a flash memory, or a hard disk. The storage section 620 stores, for example, a program, map information, and travelable information. The program is a program for causing a computer or the like to execute various functions of the base station device 600.

The control section 630 is a controller that controls each part of the base station device 600. The control section 630 is realized by, for example, a processor such as a CPU or an MPU. For example, the control section 630 is realized by a processor executing various programs stored in a storage device such as the storage section 620 using a RAM or the like as a work area. Note that all or a part of the control section 630 may be realized by an integrated circuit such as ASIC or FPGA. Any of the CPU, the MPU, the ASIC, and the FPGA can be regarded as the controller.

The control section 630 includes a communication section 6001 and a communication recording section 6002.

The communication section 6001 executes communication with the communication device 700 via the antenna 610. For example, the communication section 6001 transmits the execution record information. The execution record information includes base station identification information, communication information, and date and time information. The base station identification information may include identification information for identifying the base station device 600. The communication information is information indicating content of communication. For example, the communication information includes information such as a power consumption value, a voltage value, and a current value applied to communication. The date and time information is information indicating a date and time of communication. In addition, execution record information indicating abnormality is the execution record information having communication information indicating a power value, a voltage value, a current value, and the like that are out of a specified range.

The communication recording section 6002 controls recording of communication. Furthermore, the communication recording section 6002 generates the execution record information when executing communication with the communication device 700. Then, the communication recording section 6002 causes the communication section 6001 to transmit the execution record information.

The communication device 700 is installed in a vehicle such as an automobile and executes communication with the base station device 600. Note that the communication device 700 may be a mobile terminal such as a smartphone or a tablet terminal, may be provided in a laptop, or may be provided in another device.

The communication device 700 includes an antenna 710, a receiver 720, an antenna 730, a storage section 740, and a control section 750.

The antenna 710 is a device that receives the electromagnetic wave. The antenna 710 receives the electromagnetic wave in order to measure the intensity of the electromagnetic wave transmitted from the base station device 600.

The receiver 720 is connected to the antenna 710. The receiver 720 outputs an electric signal indicating the electromagnetic wave received by the antenna 710 to the control section 750.

The antenna 730 is a device that transmits and receives the electromagnetic wave. The antenna 730 performs communication with the server device 500.

The storage section 740 is a storage device capable of reading and writing data, such as a DRAM, an SRAM, a flash memory, or a hard disk. The storage section 740 stores, for example, a program, map information, and travelable information. The program is a program for causing a computer or the like to execute various functions of the communication device 700.

The control section 750 is a controller that controls each part of the communication device 700. The control section 750 is realized by, for example, a processor such as a CPU or a MPU. For example, the control section 750 is realized by a processor executing various programs stored in a storage device such as the storage section 740 using a RAM or the like as a work area. Note that all or a part of the control section 750 may be realized by an integrated circuit such as ASIC or FPGA. Any of the CPU, the MPU, the ASIC, and the FPGA can be regarded as the controller.

The control section 750 includes a position information acquisition section 7001, a diagnosis section 7002, and a communication section 7003.

The position information acquisition section 7001 has the same function as the position information acquisition section 1002 of the first embodiment.

The diagnosis section 7002 diagnoses whether or not the base station device 600 has failed based on a signal indicating the intensity of the electromagnetic wave output from the receiver 720. More specifically, the diagnosis section 7002 determines whether the intensity of the electromagnetic wave is within a prescribed range. When the intensity of the electromagnetic wave is out of the prescribed range, the diagnosis section 7002 determines that the base station device 600 has failed. In addition, the diagnosis section 7002 generates failure detection information when it is determined that the base station device 600 has failed.

The failure detection information includes base station identification information, intensity information, and date and time information. The base station identification information is identification information for identifying the base station device 600 in communication, i.e., the base station device 600 that has transmitted the electromagnetic wave having the intensity equal to or greater than the threshold. Note that, when the communication device 700 of a communication target can be identified based on the position of the communication device 700, the failure detection information may include the position information indicating the current position of the communication device 700. The intensity information is information indicating the intensity of the electromagnetic wave determined as a failure of the base station device 600. The date and time information is information indicating a date and time when it is determined that the base station device 600 has failed.

The communication section 7003 executes communication with the server device 500. When the diagnosis section 7002 generates the failure detection information, the communication section 7003 transmits the failure detection information to the server device 500.

The server device 500 has a function similar to that of the second embodiment.

The communication device 700 executes the failure detection process similar to that of the power receiver 400 according to the second embodiment. In other words, the communication device 700 transmits the failure detection information to the server device 500 when receiving the electromagnetic wave having the intensity out of the prescribed range set in advance.

The server device 500 executes the failure notification process similar to that of the server device 500 according to the second embodiment.

As described above, according to the communication device 700 of Modification 2 of the second embodiment, the diagnosis section 7002 diagnoses whether or not the base station device 600 emits an unexpected electromagnetic wave based on the electric signal output from the antenna 710 that receives the electromagnetic wave relating to the communication. As a result, the communication device 700 can detect a failure of the base station device 600 based on whether or not the base station device 600 is emitting the unexpected electromagnetic wave.

### (7. Third embodiment)

### [7-1. Configuration of insurance premium calculation device according to third embodiment]

An insurance premium calculation device 800 according to a third embodiment calculates an insurance premium based on the travel prohibition information. The same components as those of the first embodiment are denoted by the same reference signs, and the description thereof will be omitted.

The insurance premium of the mobile body 1 such as an automobile is calculated according to a possibility of causing an accident. Even when traveling by automated driving or the like, it is required to calculate the insurance premium according to the possibility of causing an accident, similarly to manual driving. Therefore, there is a demand for a technology capable of calculating the insurance premium according to the possibility of causing an accident in automated driving.

In the first embodiment, the travel prohibited area is identified by detecting the electromagnetic wave, such as the interference radio wave, having the intensity equal to or greater than the threshold. The travel prohibited area is an area where the electromagnetic wave, such as the interference radio wave, having the intensity equal to or greater than the threshold is emitted. Therefore, there is a high possibility that the mobile body 1 causes an accident when the mobile body 1 travels in the travel prohibited area or a periphery thereof. Therefore, the insurance premium calculation device 800 calculates the insurance premium based on the travel prohibition information indicating the travel prohibited area.

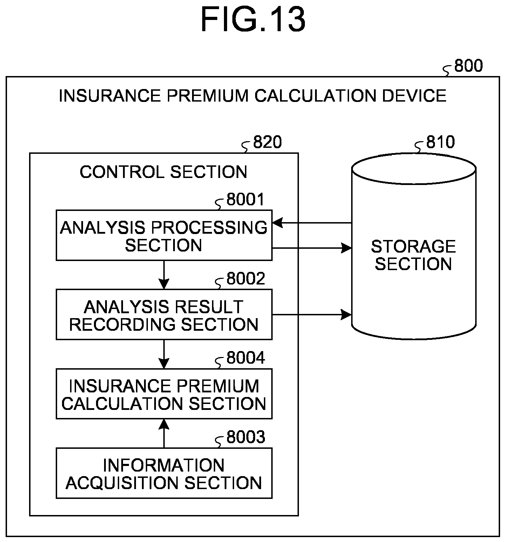

FIG. 13 is a diagram illustrating a configuration example of the insurance premium calculation device 800 according to the third embodiment of the present disclosure. The insurance premium calculation device 800 includes a storage section 810 and a control section 820.

The storage section 810 is a storage device capable of reading and writing data, such as a DRAM, an SRAM, a flash memory, or a hard disk. The storage section 810 stores, for example, a program, map information, and travel prohibition information acquired from a plurality of mobile bodies 1. The program is a program for causing a computer or the like to execute various functions of the insurance premium calculation device 800.

The control section 820 is a controller that controls each part of the insurance premium calculation device 800. The control section 820 is realized by, for example, a processor such as a CPU or a MPU. For example, the control section 820 is realized by a processor executing various programs stored in a storage device such as the storage section 810 using a RAM or the like as a work area. Note that all or a part of the control section 820 may be realized by an integrated circuit such as ASIC or FPGA. Any of the CPU, the MPU, the ASIC, and the FPGA can be regarded as the controller.

The control section 820 includes an analysis processing section 8001, an analysis result recording section 8002, an information acquisition section 8003, and an insurance premium calculation section 8004.

Based on the travel prohibition information stored in the storage section 810, the analysis processing section 8001 calculates a risk level when the mobile body 1 travels at each point in the map information. Here, a frequency with low tolerance is different for each type of the mobile body 1 such as a model of the mobile body 1 and each type of ADSA or automated driving system. Therefore, the analysis processing section 8001 may calculate a risk level at a point in the map information for each type of the mobile body 1 such as the model of the mobile body 1 and each type of the ADAS or the automated driving system. In addition, the risk level may be a value indicating a percentage of causing an accident or the like, or may be a value indicating any stage in a plurality of stages classified such as grades.

The analysis result recording section 8002 records the risk level at each point calculated by the analysis processing section 8001. In other words, the analysis result recording section 8002 stores the risk level at each point calculated by the analysis processing section 8001 in the storage section 810.

The information acquisition section 8003 receives an input of the insurance premium calculation information used for calculating the insurance premium. The insurance premium calculation information includes insured person information, vehicle information, usage mode information, and the like. The insured person information is information indicating a name, an age, an address, and the like of a driver who drives the mobile body 1. The vehicle information is information indicating a type of the mobile body 1 such as a model of the mobile body 1, a type of ADSA or an automated driving system, and the like. The usage mode information is information indicating a storage location of the mobile body 1, a usage mode of the mobile body 1 such as the use for commuting, and the like. Incidentally, the insurance premium calculation information may not include all of these pieces of information or may include other pieces of information. Furthermore, the information acquisition section 8003 may acquire the insurance premium calculation information via an operation device such as a keyboard or a mouse, may receive and acquire the insurance premium calculation information via a network, or may acquire the insurance premium calculation information by another method.

The insurance premium calculation section 8004 calculates the insurance premium based on the risk level at each point recorded by the analysis result recording section 8002 and the insurance premium calculation information. In other words, the insurance premium calculation section 8004 calculates the insurance premium by adding the risk level at each point to a general insurance premium calculation formula. For example, the insurance premium calculation section 8004 calculates the insurance premium based on the risk level at the point where the insured person is likely to travel. Specifically, the insurance premium calculation section 8004 increases the insurance premium when there is a plurality of points with high risk level around the storage place of the mobile body 1. In addition, when the insured person uses the mobile body 1 for commuting, the insurance premium calculation section 8004 increases the insurance premium in a case where a commuting route has a high risk level. Then, the insurance premium calculation section 8004 notifies the calculated insurance premium. Here, the notification method is not limited. For example, the insurance premium calculation section 8004 may make a notification by displaying it on a display, may make a notification by transmitting it via a network, or may make a notification by another method.

### [7-2. Calculation procedure according to third embodiment]

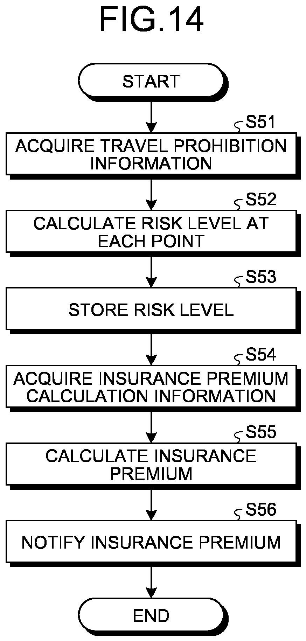

FIG. 14 is a flowchart illustrating an example of a calculation process executed by the insurance premium calculation device 800 according to the third embodiment of the present disclosure.

The analysis processing section 8001 acquires the travel prohibition information from the storage section 810 (Step S51).

The analysis processing section 8001 calculates the risk level at each point in the map information based on the travel prohibition information (Step S52). In addition, the analysis result recording section 8002 stores the risk level at each point calculated by the analysis processing section 8001 in the storage section 810 (Step S53) .

The information acquisition section 8003 acquires the insurance premium calculation information (Step S54).

The insurance premium calculation section 8004 calculates the insurance premium (Step S55). In addition, the insurance premium calculation section 8004 notifies the insurance premium calculated (Step S56).

Then, the insurance premium calculation device 800 ends the calculation process.

As described above, according to the insurance premium calculation device 800 of the third embodiment, the analysis processing section 8001 calculates the risk level at each point in the map information based on the travel prohibition information indicating the travel prohibited area. The information acquisition section 8003 calculates the insurance premium based on the risk level at each point. As a result, the insurance premium calculation device 800 can calculate the insurance premium according to the risk level of each area exposed to the electromagnetic wave.

### (8. Application example)

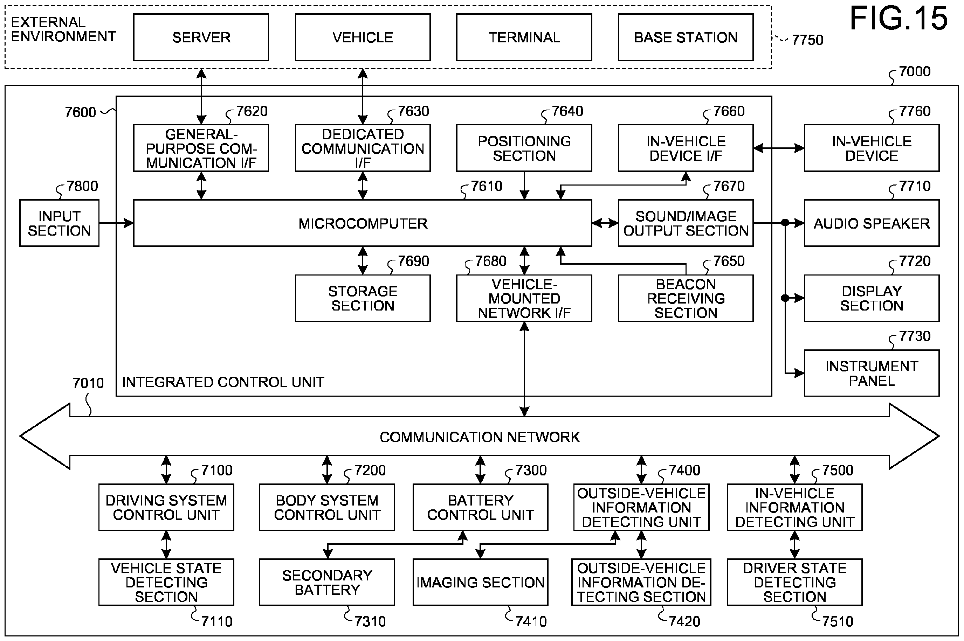

FIG. 15 is a block diagram depicting an example of schematic configuration of a vehicle control system 7000 as an example of a mobile body control system to which the technology according to an embodiment of the present disclosure can be applied. The vehicle control system 7000 includes a plurality of electronic control units connected to each other via a communication network 7010. In the example illustrated in FIG. 15, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay (registered trademark), or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. A functional configuration of the integrated control unit 7600 illustrated in FIG. 15 includes a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420. The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

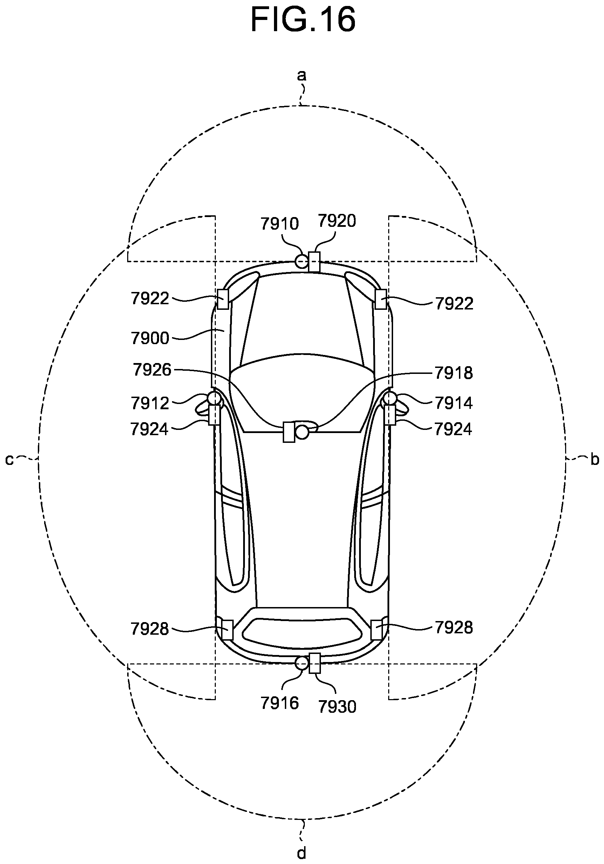

FIG. 16 depicts an example of installation positions of the imaging section 7410 and the outside-vehicle information detecting section 7420. Imaging sections 7910, 7912, 7914, 7916, and 7918 are, for example, disposed at at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Incidentally, FIG. 16 depicts an example of photographing ranges of the respective imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Returning to FIG. 15, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs. The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magneto-optical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM (registered trademark)), worldwide interoperability for microwave access (WiMAX (registered trademark)), long term evolution (LTE (registered trademark)), LTE-advanced (LTE-A), or the like, or another wireless communication protocol such as wireless LAN (referred to also as wireless fidelity (Wi-Fi (registered trademark))), Bluetooth (registered trademark), or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth (registered trademark), near field communication (NFC), or wireless universal serial bus (WUSB). In addition, the in-vehicle device I/F 7660 may establish wired connection by universal serial bus (USB), high-definition multimedia interface (HDMI (registered trademark)), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automated driving, which makes the vehicle to travel automatedly without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound and an image to an output device capable of visually or auditorily notifying information to an occupant of the vehicle or the outside of the vehicle. In the example in FIG. 15, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Incidentally, at least two control units connected to each other via the communication network 7010 in the example depicted in FIG. 15 may be integrated into one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

Incidentally, a computer program for realizing each function of the control devices 100, 100a, and 100b according to the present embodiments described with reference to FIGS. 3, 7, and 8 can be mounted on any control unit or the like. Furthermore, it is also possible to provide a computer-readable recording medium storing such a computer program. The recording medium is, for example, a magnetic disk, an optical disk, a magneto-optical disk, a flash memory, or the like. Furthermore, the computer program described above may be distributed via, for example, a network without using the recording medium.

In the vehicle control system 7000 described above, the control devices 100, 100a, and 100b according to the present embodiments described with reference to FIGS. 3, 7, and 8 can be applied to the integrated control unit 7600 of the application example illustrated in FIG. 15. For example, the driver detection section 1001, the position information acquisition section 1002, the communication section 1003, the recognition sections 1004, 1004a, and 1004b, the diagnosis sections 1005, 1005a, and 1005b, the route planning section 1006, the travel control section 1007, and the notification section 1008 of the control devices 100, 100a, and 100b correspond to the microcomputer 7610, the storage section 7690, and the vehicle-mounted network I/F 7680 of the integrated control unit 7600.

In addition, at least some components of the control devices 100, 100a, and 100b described with reference to FIGS. 3, 7, and 8 may be realized in a module (e.g., integrated circuit module configured with one die) for the integrated control unit 7600 illustrated in FIG. 15. Alternatively, the control devices 100, 100a, and 100b described with reference to FIGS. 3, 7, and 8 may be realized by a plurality of control units of the vehicle control system 7000 illustrated in FIG. 15.

### (Effects)

The control devices 100, 100a, and 100b include the recognition sections 1004, 1004a, and 1004b, the diagnosis sections 1005, 1005a, and 1005b, and the route planning section 1006. The recognition sections 1004, 1004a, and 1004b recognize the environment around the mobile body 1. The diagnosis sections 1005, 1005a, and 1005b diagnose the intensity of the electromagnetic wave emitted to the mobile body 1 that is traveling based on the recognition results of the recognition sections 1004, 1004a, and 1004b. The route planning section 1006 determines the moving route of the mobile body 1 based on the diagnosis results of the diagnosis sections 1005, 1005a, and 1005b.

As a result, the control devices 100, 100a, and 100b can prevent the system from being stopped even when the electromagnetic wave, such as the interference radio wave, having the intensity equal to or greater than the threshold is emitted.

The diagnosis sections 1005, 1005a, and 1005b diagnose the presence of emission of the electromagnetic wave having the intensity that may cause the recognition sections 1004, 1004a, and 1004b to erroneously recognize the surrounding environment of the mobile body 1.

As a result, the control devices 100, 100a, and 100b can prevent unexpected operations due to erroneous recognition of the surrounding environment.

The diagnosis sections 1005, 1005a, and 1005b diagnose the presence of emission of the electromagnetic wave equal to or greater than the threshold based on the allowable intensity at each frequency of the electromagnetic wave set for each type of the mobile body 1.

As a result, the control devices 100, 100a, and 100b can prevent unexpected operations even when the electromagnetic wave equal to or greater than the threshold is emitted.

The travel control section 1007 changes the level of the automated driving when the diagnosis sections 1005, 1005a, and 1005b diagnose that the mobile body 1 is exposed to the electromagnetic wave having the intensity equal to or greater than the threshold.

As a result, since the control devices 100, 100a, and 100b are switched to manual driving when the automated driving cannot be continued, the mobile body 1 can be moved to the destination even when the mobile body 1 does not pass through the travel prohibited area.

The diagnosis sections 1005, 1005a, and 1005b store the area where the electromagnetic wave having the intensity equal to or greater than the threshold is detected as the travel prohibited area in the storage section 1100.

As a result, since the control devices 100, 100a, and 100b store the travel prohibited area, it is possible to prevent the mobile body 1 from entering an area exposed to the electromagnetic wave having the intensity equal to or greater than the threshold after the travel prohibited area is set.

The diagnosis sections 1005, 1005a, and 1005b store the travel prohibited areas in the storage section 2200 of the server device 200.

As a result, the control devices 100, 100a, and 100b can share the travel prohibited area with a plurality of mobile bodies 1. Therefore, it is possible to prevent the mobile body 1 from entering the travel prohibited area detected by another mobile body 1.

The diagnosis sections 1005, 1005a, and 1005b store the frequency and intensity of the electromagnetic wave in the travel prohibited area in the storage section 1100.

Here, the mobile body 1 has different electromagnetic wave characteristics depending on the type and the like of the mobile body 1. In other words, the frequency at which the mobile body 1 has low tolerance varies depending on the type. Therefore, the control devices 100, 100a, and 100b can set the travel prohibited areas according to the type or the like of the mobile body 1.

The route planning section 1006 acquires the moving route on which the mobile body 1 can move to the destination without passing through the travel prohibited area.

As a result, the control devices 100, 100a, and 100b can reduce the possibility of being exposed to the electromagnetic wave, such as the interference radio wave, having the intensity equal to or greater than the threshold.

The diagnosis sections 1005, 1005a, and 1005b store an area as travel prohibited area based on the diagnosis result at the first point and the diagnosis result at the second point in the storage section 1100.

As a result, the control devices 100, 100a, and 100b can reduce the possibility of setting the area as the travel prohibited area due to erroneous detection.

When the mobile body 1 is exposed to the electromagnetic wave having the intensity equal to or greater than the threshold at the first point and the intensity of the electromagnetic wave decreases at the second point where the intensity of the electromagnetic wave is assumed to decrease, diagnosis sections 1005, 1005a, and 1005b stores an area as the travel prohibited area in the storage section 1100.

As a result, the control devices 100, 100a, and 100b can reduce the possibility of setting the area as the travel prohibited area due to erroneous detection.

When the intensity of the electromagnetic wave does not decrease at the second point, the diagnosis sections 1005, 1005a, and 1005b determine that there is a failure in the function of diagnosing the electromagnetic wave.

As a result, the control devices 100, 100a, and 100b can detect the failure of the function of diagnosing the electromagnetic wave.

When the travel prohibited area is stored in the storage section 1100 by the diagnosis sections 1005, 1005a, and 1005b, the route planning section 1006 acquires the moving route allowing movement from the second point to the destination without passing through the travel prohibited area.

As a result, the control devices 100, 100a, and 100b can reduce the possibility that the mobile body 1 enters the travel prohibited area again after setting the travel prohibited area and is exposed to the electromagnetic wave having the intensity equal to or greater than the threshold.

The diagnosis sections 1005, 1005a, and 1005b diagnose the intensity of the electromagnetic wave emitted to the mobile body 1 based on the electronic signal output from the antenna 142.

As a result, the control devices 100, 100a, and 100b can detect and avoid the electromagnetic wave having the intensity equal to or greater than the threshold.

The diagnosis section 1005a diagnoses the intensity of the electromagnetic wave emitted to the mobile body 1 based on the error rate with respect to the data in the communication.

As a result, the control device 100a can detect and avoid the electromagnetic wave having the intensity equal to or greater than the threshold without adding special hardware such as the antenna 142.

The diagnosis section 1005b diagnoses the intensity of the electromagnetic wave emitted to the mobile body 1 based on the data loss rate in the communication.

As a result, the control device 100b can detect and avoid the electromagnetic wave having the intensity equal to or greater than the threshold without adding special hardware such as the antenna 142.

Incidentally, the effects described in the present specification are merely examples and not limited, and other effects may be provided.

The present technology can also have the following configurations.
(1) A control device comprising:
   a recognition section configured to recognize an environment around a mobile body;
   a diagnosis section configured to diagnose, based on a recognition result of the recognition section, an intensity of an electromagnetic wave emitted to the mobile body while traveling; and
   a route planning section configured to determine a moving route of the mobile body based on a diagnosis result of the diagnosis section.
(2) The control device according to (1), wherein
   the diagnosis section diagnoses presence of emission of the electromagnetic wave having an intensity that the recognition section may erroneously recognize the environment around the mobile body.
(3) The control device according to (1) or (2), wherein
   the diagnosis section diagnoses presence of emission of the electromagnetic wave equal to or greater than a threshold based on an allowable intensity at each frequency of the electromagnetic wave set for each type of the mobile body.
(4) The control device according to any one of (1) to (3), further comprising
   a travel control section configured to change a level of automated driving when the diagnosis section diagnoses that the mobile body is exposed to the electromagnetic wave having an intensity equal to or greater than a threshold.
(5) The control device according to any one of (1) to (4), wherein
   the diagnosis section stores, in a storage section, an area where the electromagnetic wave having an intensity equal to or greater than a threshold is detected, the area being stored as a travel prohibited area.
(6) The control device according to (5), wherein
   the diagnosis section stores the travel prohibited area in the storage section of a server device.
(7) The control device according to (5) or (6), wherein
   the diagnosis section stores, in the storage section, a frequency and an intensity of the electromagnetic wave in the travel prohibited area.
(8) The control device according to any one of (5) to (7), wherein
   the route planning section acquires a moving route on which the mobile body can move to a destination without passing through the travel prohibited area.
(9) The control device according to any one of (5) to (8), wherein
   the diagnosis section stores, in the storage section, the area as the travel prohibited area based on a diagnosis result at a first point and a diagnosis result at a second point.
(10) The control device according to (9), wherein
   the diagnosis section stores, in the storage section, the area as the travel prohibited area when the diagnosis section diagnoses that the mobile body is exposed to the electromagnetic wave having the intensity equal to or greater than the threshold at the first point, and the intensity of the electromagnetic wave emitted to the mobile body is decreased at the second point where the intensity of the electromagnetic wave is assumed to be decreased.
(11) The control device according to (9) or (10), wherein
   the diagnosis section determines that there is a failure in a function of diagnosing the electromagnetic wave when the intensity of the electromagnetic wave is not decreased at the second point.
(12) The control device according to any one of (9) to (11), wherein
   when the travel prohibited area is stored in the storage section by the diagnosis section, the route planning section acquires a moving route allowing movement from the second point to a destination without passing through the travel prohibited area.
(13) The control device according to any one of (1) to (12), wherein
   the diagnosis section diagnoses the intensity of the electromagnetic wave emitted to the mobile body based on an electronic signal output from an antenna.
(14) The control device according to any one of (1) to (12), wherein
   the diagnosis section diagnoses the intensity of the electromagnetic wave emitted to the mobile body based on an error rate with respect to data in communication.
(15) The control device according to any one of (1) to (12), wherein
   the diagnosis section diagnoses the intensity of the electromagnetic wave emitted to the mobile body based on a data loss rate in communication.
(16) A control method comprising:
   a recognition step of recognizing an environment around a mobile body;
   a diagnosis step of diagnosing, based on a recognition result obtained in the recognition step, an intensity of an electromagnetic wave emitted to the mobile body while traveling; and
   a route planning step of determining a moving route of the mobile body based on a diagnosis result in the diagnosis step.
(17) A storage medium storing a program causing a computer to function as:
   a recognition section configured to recognize an environment around a mobile body;
   a diagnosis section configured to diagnose, based on a recognition result of the recognition section, an intensity of an electromagnetic wave emitted to the mobile body while traveling; and
   a route planning section configured to determine a moving route of the mobile body based on a diagnosis result of the diagnosis section.
(18) A control system comprising:
   a device configured to generate an electric signal when exposed to an electromagnetic wave;
   a recognition section configured to recognize an environment around a mobile body;
   a diagnosis section configured to diagnose, based on a recognition result of the recognition section, an intensity of the electromagnetic wave emitted to the mobile body while traveling, based on a signal output from the device; and
   a route planning section configured to determine a moving route of the mobile body based on a diagnosis result of the diagnosis section.

### Reference Signs List

1 MOBILE BODY
10, 10a, 10b, 20, 20a CONTROL SYSTEM
100, 100a, 100b CONTROL DEVICE
142, 1200, 330, 450, 510, 610, 710 ANTENNA
151 Ser
152, 162 TRANSMISSION PATH
153 Des
161, 163 PHY
200 SERVER DEVICE
300 POWER TRANSMITTER
400 POWER RECEIVER
500 SERVER DEVICE
600 BASE STATION DEVICE
700 COMMUNICATION DEVICE
800 INSURANCE PREMIUM CALCULATION DEVICE
1001 DRIVER DETECTION SECTION
1002, 4001, 7001 POSITION INFORMATION ACQUISITION SECTION
1003, 4004, 3001, 5001, 6001, 7003 COMMUNICATION SECTION
1004, 1004a, 1004b RECOGNITION SECTION
1005, 1005a, 1005b, 4003, 7002 DIAGNOSIS SECTION
1006 ROUTE PLANNING SECTION
1007 TRAVEL CONTROL SECTION
1008 NOTIFICATION SECTION
1009, 1009b RECOGNITION DIAGNOSIS SECTION
1101 CONTROL PROGRAM
2001 COMMUNICATION SECTION
2002 DATA MANAGEMENT SECTION
2100 ANTENNA
3002 POWER TRANSMISSION CONTROL SECTION
4002 POWER FEED CONTROL SECTION
5002 MAINTENANCE MANAGEMENT SECTION
6002 COMMUNICATION RECORDING SECTION
8001 ANALYSIS PROCESSING SECTION
8002 ANALYSIS RESULT RECORDING SECTION
8003 INFORMATION ACQUISITION SECTION
8004 INSURANCE PREMIUM CALCULATION SECTION

## Claims

1. A control device comprising:
a recognition section configured to recognize an environment around a mobile body;
a diagnosis section configured to diagnose, based on a recognition result of the recognition section, an intensity of an electromagnetic wave emitted to the mobile body while traveling; and
a route planning section configured to determine a moving route of the mobile body based on a diagnosis result of the diagnosis section.

2. The control device according to claim 1, wherein
the diagnosis section diagnoses presence of emission of the electromagnetic wave having an intensity that the recognition section may erroneously recognize the environment around the mobile body.

3. The control device according to claim 1, wherein
the diagnosis section diagnoses presence of emission of the electromagnetic wave equal to or greater than a threshold based on an allowable intensity at each frequency of the electromagnetic wave set for each type of the mobile body.

4. The control device according to claim 1, further comprising
a travel control section configured to change a level of automated driving when the diagnosis section diagnoses that the mobile body is exposed to the electromagnetic wave having an intensity equal to or greater than a threshold.

5. The control device according to claim 1, wherein
the diagnosis section stores, in a storage section, an area where the electromagnetic wave having an intensity equal to or greater than a threshold is detected, the area being stored as a travel prohibited area.

6. The control device according to claim 5, wherein
the diagnosis section stores the travel prohibited area in the storage section of a server device.

7. The control device according to claim 5, wherein
the diagnosis section stores, in the storage section, a frequency and an intensity of the electromagnetic wave in the travel prohibited area.

8. The control device according to claim 5, wherein
the route planning section acquires a moving route on which the mobile body can move to a destination without passing through the travel prohibited area.

9. The control device according to claim 5, wherein
the diagnosis section stores, in the storage section, the area as the travel prohibited area based on a diagnosis result at a first point and a diagnosis result at a second point.

10. The control device according to claim 9, wherein
the diagnosis section stores, in the storage section, the area as the travel prohibited area when the diagnosis section diagnoses that the mobile body is exposed to the electromagnetic wave having the intensity equal to or greater than the threshold at the first point, and the intensity of the electromagnetic wave emitted to the mobile body is decreased at the second point where the intensity of the electromagnetic wave is assumed to be decreased.

11. The control device according to claim 9, wherein
the diagnosis section determines that there is a failure in a function of diagnosing the electromagnetic wave when the intensity of the electromagnetic wave is not decreased at the second point.

12. The control device according to claim 9, wherein
when the travel prohibited area is stored in the storage section by the diagnosis section, the route planning section acquires a moving route allowing movement from the second point to a destination without passing through the travel prohibited area.

13. The control device according to claim 1, wherein
the diagnosis section diagnoses the intensity of the electromagnetic wave emitted to the mobile body based on an electronic signal output from an antenna.

14. The control device according to claim 1, wherein
the diagnosis section diagnoses the intensity of the electromagnetic wave emitted to the mobile body based on an error rate with respect to data in communication.

15. The control device according to claim 1, wherein
the diagnosis section diagnoses the intensity of the electromagnetic wave emitted to the mobile body based on a data loss rate in communication.

16. A control method comprising:
a recognition step of recognizing an environment around a mobile body;
a diagnosis step of diagnosing, based on a recognition result obtained in the recognition step, an intensity of an electromagnetic wave emitted to the mobile body while traveling; and
a route planning step of determining a moving route of the mobile body based on a diagnosis result in the diagnosis step.

17. A storage medium storing a program causing a computer to function as:
a recognition section configured to recognize an environment around a mobile body;
a diagnosis section configured to diagnose, based on a recognition result of the recognition section, an intensity of an electromagnetic wave emitted to the mobile body while traveling; and
a route planning section configured to determine a moving route of the mobile body based on a diagnosis result of the diagnosis section.

18. A control system comprising:
a device configured to generate an electric signal when exposed to an electromagnetic wave;
a recognition section configured to recognize an environment around a mobile body;
a diagnosis section configured to diagnose, based on a recognition result of the recognition section, an intensity of the electromagnetic wave emitted to the mobile body while traveling, based on a signal output from the device; and
a route planning section configured to determine a moving route of the mobile body based on a diagnosis result of the diagnosis section.
